# EUROPÄISCHE PATENTSCHRIFT

(11) **EP 1 526 987 B1**
(45) Veröffentlichungstag und Bekanntmachung des Hinweises auf die Patenterteilung: **05.03.2008**
(21) Anmeldenummer: 03783935.4
(22) Anmeldetag: 29.07.2003
(51) Int. Cl.: B60R 16/02, B60W 50/00

(54) **COMPUTERSYSTEM UND VERFAHREN ZUR STEUERUNG, INSBESONDERE ZUR KOORDINIERTEN ANTRIEBSSTRANGSTEUERUNG EINES KRAFTFAHZEUGES**
COMPUTER SYSTEM AND METHOD FOR CONTROLLING, PARTICULARLY FOR EXECUTING THE COORDINATED DRIVE TRAIN CONTROL OF A MOTOR VEHICLE
SYSTEME INFORMATIQUE ET PROCEDE DE COMMANDE, NOTAMMENT DE COMMANDE COORDONNEE, DE LA CHAINE CINEMATIQUE D'UN VEHICULE

(30) Priorität: 29.07.2002 DE 10234635; 29.07.2003 DE 10334536
(43) Veröffentlichungstag der Anmeldung: 04.05.2005
(73) Patentinhaber: ROBERT BOSCH GMBH, 70442 Stuttgart (DE)
(72) Erfinder: BASSIERE, Dirk, 71679 Asperg (DE); BICKENDORF, Frank, 71254 Ditzingen (DE); FREI, Rasmus, 74321 Bietigheim-Bissingen (DE)
(86) Internationale Anmeldenummer: PCT/DE2003/002541
(87) Internationale Veröffentlichungsnummer: WO 2004/014700

(56) Entgegenhaltungen:
- WO-A-02/02366
- DE-A- 10 000 997
- DE-A- 10 044 319
- DE-A- 19 648 055
- US-A- 5 957 985

## Beschreibung

Die Erfindung betrifft ein Computersystem und ein Verfahren zur Steuerung, insbesondere zur koordinierten Antriebsstrangsteuerung eines Kraftfahrzeuges.

In der Automobiltechnik wurde ursprünglich die Elektronik nur in Form einzelner, elektronifizierter Komponenten eingesetzt, wobei diese Komponenten isoliert und unabhängig voneinander agierten. Daran anschließend wurden diese Komponenten zunehmend zu Systemen integriert. Beispiele hierfür sind elektronische Motorsteuenmgssysteme, Bremsregelungssysteme oder Fahrerinformationssysteme. Derzeit ist ein Trend hin zur Vernetzung aller Fahrzeugsysteme untereinander und zunehmend auch mit der Fahrzeugumwelt zu beobachten.

Dieses erkennbare Zusammenwachsen der Systeme bringt nun erhebliche technische und organisatorische Herausforderungen mit sich:
- neue Fahrzeugfunktionen sind häufig nur noch im Verbund unterschiedlicher Teilsysteme realisierbar und effektiv nutzbar,
- damit wird eine funktionale Integration von Teilsystemen auch unterschiedlicher Zulieferer erforderlich,
- die Wertigkeit und der Charakter von Fahrzeugen werden zunehmend durch komplexe Softwarefunktionen bestimmt,
- die Beherrschung der wachsenden Systemkomplexität wird für Fahrzeughersteller und Zulieferer wettbewerbsentscheidend hinsichtlich Geschwindigkeit, Kosten und Qualität.

### Stand der Technik

Ein fehlertolerantes Kraftfahrzeugsteuerungssystem für ein Kraftfahrzeug mit einer Vielzahl von elektronischen Kraftfahrzeugkomponenten ist aus der Druckschrift US 5 957 985 A bekannt. Hierbei weist jede elektronische Kraftfahrzeugkomponente einen lokalen Controller zum Steuern des Betriebs der elektronischen Kraftfahrzeugkomponente auf, wobei jeder lokale Controllertreiber Software speichert und der Controller derart ausgestaltet ist, dass er bei Ausführung der Software die elektronische Kraftfahrzeugkomponente steuert. Außerdem umfasst das Kraftfahrzeugsteuerungssystem eine elektronische, mit den elektronischen Kraftfahrzeugkomponenten verbundene Master-Steuereinheit, die einen Computerprozessor aufweist, wobei jede der elektronischen Komponenten zum Registrieren der Master-Steuereinheit und zum Programmieren der Master-Steuereinheit während der Initialisierung und beim Hinzufügen zu dem System durch Herunterladen der Treibersoftware für die lokalen Controller und durch Speichern der Treibersoftware in der Master-Steuereinheit ausgestaltet ist. Dabei wird der Computerprozessor zum Durchführen der Steueraufgaben des lokalen Controllers derart programmiert, dass in einem Fall eines Ausfalls einer der lokalen Controller der Computerprozessor die Treibersoftware des ausgefallenen lokalen Controllers ausführt, so dass die Master-Steuereinheit die elektronische Kraftfahrzeugkomponente statt des ausgefallenen lokalen Controllers steuert, wobei die Master-Steuereinheit während des Betriebs des Steuerungssystems zum kontinuierlichen Überwachen des Ausfalls eines lokalen Controllers ausgestaltet ist. Dabei umfasst jede elektronische Kraftfahrzeugkomponente eine Schaltlogik, die zum selektiven Weiterleiten von Daten zu dem lokalen Controller oder zu der Master-Steuereinheit bei Ausfall des lokalen Controllers ausgestaltet ist.

Ein Steuerungssystem für ein Fahrzeug mit mehreren Signalverarbeitungsebenen und Aktuatoren ist aus der Druckschrift WO 02/02366 A1 bekannt. Dabei sind derartige Signalverarbeitungsebenen und Aktuatoren bspw. für Bremsen, Lenkung, Motor und Getriebe zur Umsetzung von Ansteuersignalen vorgesehen. Weiterhin sind als Signalverarbeitungsebenen eine Eingangsebene, eine prädiktive Ebene, eine Koordinatenebene und eine Ausführungsebene vorgesehen. Hierbei umfasst die Eingabeebene Einrichtungen zum Eingeben kontinuierlicher Vorgaben eines Fahrers und zum Umsetzen der Vorgaben in Sollwertsignale und eine Automatisierungsebene mit ersten Signalverarbeitungsmodulen zum Umsetzen der Vorgaben der Eingabeebene in Sollwertsignale. Die prädiktive Ebene umfasst zweite Signalverarbeitungsmodule zum Korrigieren der Sollwertsignale anhand einer Voraussage von Fahrzuständen und/oder eine reaktive Ebene mit dritten Signalverarbeitungsmodulen zum Korrigieren der Sollwertsignale anhand von aktuellen Fahrzuständen. In der Koordinationsebene sind vierte Signalverarbeitungsmodule zum Umsetzen der Sollwertsignale in Ansteuersignale vorgesehen. Die Ausführungsebene weist Aktuatoren zum Ausführen der Ansteuersignale auf. Weiterhin ist vorgesehen, dass die Aktuatoren mit den vierten Signalverarbeitungsmodulen und untereinander durch eine fehlertoleranten, redundanten und bidirektionalen Datenbus verbunden sind. Die ersten, zweiten, dritten und/oder vierten Signalverarbeitungsmodule sind zur redundanten Signalverarbeitung geeignet. Zwischen zwei aufeinanderfolgenden Signalverarbeitungsebenen sind Einrichtungen zur fehlertoleranten, redundanten und bidirektionalen Datenübertragung vorgesehen.

Aus der DE 199 16 637 C1 ist ein Verfahren zum Steuern des Antriebsstranges eines Kraftfahrzeuges und eine Antriebsstrangsteuerung eines Kraftfahrzeuges bekannt. Ziel ist es dabei auch für Kraftfahrzeuge mit einem automatischen Getriebe bei Betätigen der Betriebsbremse durch den Fahrer die Verzögerung durch den Antriebsstrang des Kraftfahrzeuges zu unterstützen. Eine Zentral-Steuereinheit bewertet einen Bremsmomentenwunsch oder Fahrzeugverzögerungswunsch des Fahrers, beispielsweise zusätzlich abhängig von den Betriebsparametern Fahrertyp, Lastzustand und Straßenverhältnisse (z. B. Wintermodus), der durch Betätigen des Bremspedals geäußert wird. Auf Basis dieses ermittelten Bremsmoments wird ein Motorschleppmomenten-Sollwert bestimmt. Die Übersetzung des automatischen Getriebes wird abhängig vom Motorschleppmomenten-Sollwert anhand eines Rückschaltkennfeldes automatisch festgelegt. Nachteiligerweise werden sämtliche Vorgänge von einer Zentral-Steuereinheit gesteuert, so dass eine Anpassung der Zentral-Steuereinheit an verschiedene Fahrzeugtypen oder der Einbau neuer Steuerungskomponenten nicht möglich ist.

Aus der DE 199 40 703 C1 ist ein Verfahren und eine Vorrichtung zur Motor- und Getriebesteuerung bei einem Kraftfahrzeug mit einem Verbrennungsmotor, der von einer Motorsteuerung gesteuert wird, und einem Stufenautomatikgetriebe, das von einer Getriebesteuerung gesteuert wird, bekannt. Dabei wird das Radantriebsmoment (Radmoment) auch bei einem Stufenautomatikgetriebe bei konstanter Fahrpedalstellung stetig (kontinuierlich) über der Fahrzeuggeschwindigkeit geändert. Das Radmoment hat als Funktion der Fahrzeuggeschwindigkeit einen abnehmenden, hyperbelartigen Verlauf, bei dem ungeachtet der Schaltvorgänge keine Unstetigkeit im Radmomentenverlauf auftritt. Aus einem vom Fahrer gewünschten Radmoment wird von der Gesamtheit aus Momentenkoordinator, Motorsteuerung und Getriebesteuerung ein Soll-Motormoment berechnet und im Rahmen der physikalischen Grenzen umgesetzt. Außerhalb des Schaltvorganges des Stufenautomatikgetriebes wird dies dadurch erreicht, dass zumindest in Abhängigkeit von der Getriebeübersetzung und dem vorgegebenen Getriebeabtriebsmoment eine auf die Füllung wirkende Momentenvorgabe und/oder eine auf die Zündung wirkende Momentenvorgabe berechnet werden. Damit soll ein bestimmtes Motormoment erreicht werden, welches unter Zwischenschaltung der bekannten Übersetzung gerade das vorgegebene Getriebeabtriebsmoment ergibt. Während des Schaltvorganges des Stufenautomatikgetriebes erfolgt die Realisierung des Getriebeabtriebsmomentes im Wesentlichen über ein im Stufenautomatikgetriebe vorgesehenes Reibelement. Entsprechend der für das Reibelement gewählten Stellgröße wird ein bestimmtes Moment übertragen. Daher wird die Stellgröße während des Schaltvorganges gerade so eingestellt, dass das gewünschte Getriebeabtriebsmoment gemäß einer wählbaren Übergangsfunktion erzielt wird. Nachteilig ist hierbei, dass das Radmoment ausschließlich von der Fahrpedalstellung abhängt und keine anderen Faktoren, z. B. Fahrertyp oder Radschlupf, berücksichtigt werden. Das Verfahren und die Vorrichtung sind nicht flexibel, weil diese in eine Motor- und Getriebesteuerung eines Fahrzeuges integriert sind, somit eine Übertragung auf andere Fahrzeugtypen und Steuergerätekonfigurationen nicht möglich sind. Des Weiteren können auch nicht neue Steuerfunktionen integriert werden.

Aus der DE 198 38 333 A1 der Anmelderin ist ein Computersystem mit wenigstens einem Prozessor und wenigstens einem Speicher zur Steuerung einer Antriebseinheit bekannt. Ziel ist es eine Steuerungsstruktur des Gesamtfahrzeuges anzugeben, mit deren Hilfe der Triebstrang und speziell die Antriebseinheit mit außerhalb liegenden Komponenten verknüpft werden können. Triebstrang und Antriebseinheit sind in einem Motormanagement in ein Gesamtfahrzeugkonzept eingebunden. Das Fahrzeug wird als Gesamtsystem, bestehend aus Funktionseinheiten, als eine erste Komponente aufgefasst. Das Gesamtsystem, bestehend aus Funktionseinheiten, wird in verschiedene, vorgebbare Komponenten, z. B. Fahrzeugbewegung und Antriebskoordinator, aufgeteilt. Die Antriebseinheit wird dabei als eine Komponente vorgegeben. Die Antriebseinheit wird abhängig von den vorgegebenen Komponenten und/oder den an den Schnittstellen zwischen den Komponenten ausgetauschten Daten gesteuert. Durch diesen Systemverbund können einzelne Elemente oder Funktionseinheiten nicht mehr getrennt betrachtet werden, sondern eingebunden in das Gesamtkonzept. Bei einer Antriebs- bzw. Motorsteuerung beispielsweise müssen nicht nur Momenten- bzw. Leistungsanforderungen oder Drehzahlvorgaben der Fahrzeugbewegung, wie Lenkung, Bremse oder Fahrdynamikregelung berücksichtigt werden, sondern auch die Leistungs- bzw. Momentenforderungen und/oder Drehzahlinformationen aller Nebenaggregate und Stellglieder. Darüber hinaus ergibt sich aber auch die Möglichkeit, durch den Zugriff auf Daten und Informationen anderer Funktionseinheiten und Systeme, wie z. B. Umweltgrößen, Fahrzustandsgrößen, Fahrzeuggrößen und Benutzergrößen, eine an die jeweiligen Gegebenheiten angepasste Antriebssteuerung durchzuführen. Nachteilig ist hierbei jedoch, dass es nicht möglich ist einzelne Funktionseinheiten modulartig auszutauschen, d. h. ein flexibler modulartiger Systemaufbau ist nicht vorhanden. Des Weiteren sind auch keine umfassenden Angaben zur konkreten Umsetzung der Zielvorgaben gemacht.

Aus der EP 0 883 510 B1 ist eine Antriebsstrangsteuerung für ein Kraftfahrzeug bekannt, die eine Radmomentenberechnungsschaltung enthält, durch die die Stellung des Fahrpedals als ein vom Fahrer gewünschtes Radmoment oder Getriebeausgangsmoment interpretiert und zum Berechnen von Sollwerten für das von dem Antriebsstrang abzugebende Drehmoment verwendet wird, und die eine Steuerschaltung aufweist, die mit einem Fuzzy-System versehen ist, in dem das gewünschte Radmoment zusammen mit Betriebsparametern des Kraftfahrzeugs und Umweltparametern ausgewertet wird, durch die anhand einer zentralen Fahrstrategie-Auswahlschaltung die Betriebsweise des Antriebsstrangs bei beliebiger Fahrweise des Fahrers und Fahrsituation des Kraftfahrzeugs an vorgegebene Kriterien angepasst wird, und die mit einer Motorleistungsstelleinheit verbunden ist, an die sie ein Ausgangssignal abgibt, durch welches das von den Rädern auf die Fahrbahn abzugebende Soll-Raddrehmoment festgelegt wird. Es wird eine Strategie für die Motorsteuerung, die Motorleistungsstelleinheit und die Getriebesteuerung zentral derart festgelegt, dass der Ausstoß von Schadstoffen minimiert wird. Die zentrale Strategie kann auch einen fahrleistungsorientierten Modus des Kraftfahrzeuges zum Ziel haben. Alle dezentralen Funktionseinheiten werden bei dieser Strategie so eingestellt, dass eine bestmögliche Beschleunigung und ein schnelles Ansprechen des Antriebes auf den Fahrerwunsch zur Verfügung stehen. Notwendig ist ein solcher Modus bei einer sportlichen Fahrweise und bei Bergauffahrt. Die Steuerung erfolgt über eine Steuerschaltung, wobei der Datenaustausch über eine schnelle serielle Buskommunikation, z. B. einen CAN-Bus, ausgeführt wird.

Nachteilig ist hierbei, dass aufgrund der Gesamtkonfiguration nur eine sehr geringe Flexibilität hinsichtlich unterschiedlicher Fahrzeug- und Steuergerätekonfigurationen und Wiederverwendbarkeit von entwickelten Softwarekomponenten besteht, weil sämtliche Komponenten an die zentrale Steuerschaltung angepasst sind.

In Kraftfahrzeugen werden für verschiedene Komponenten im Triebstrang, wie Motor und Getriebe, Schnittstellen zur Kommunikation vereinbart, über die Anforderungen übermittelt werden können, damit sie von der empfangenden Komponente ausgeführt werden (im Kraftfahrzeugbereich verbreitete technische Schnittstelle zur Steuergerätevernetzung ist beispielsweise der CAN-Bus).

Neben dem Fahrpedal und dem Bremspedal gibt es viele weitere Anforderer, die Vorgaben an den Antriebsstrang machen können. Typische Beispiele hierfür sind Komfortsysteme wie der Fahrgeschwindigkeitsregler oder Sicherheitssysteme wie ASR und ESP. Dabei wird ein großer Teil an Entwicklung und Rechenkapazität nachteiligerweise dafür aufgewendet, entsprechend der aktuellen Fahrsituation zu entscheiden, wann welches System tatsächlich aktiv den Arbeitspunkt des Triebstranges vorgeben oder beeinflussen darf.

Es ist bekannt, aufsetzend auf einem Echtzeit-Betriebssystem als Standard-Betriebssystem, z. B. ERCOS oder OSEK bzw. OSEK/VDX, zur Steuerung von Betriebsabläufen eines Fahrzeugs eingebettete Softwarelösungen einzusetzen. Dabei werden applikationsspezifische Funktionen, Systemgrundfunktionen, Kernfunktionen sowie die entsprechende Treibersoftware, also die spezifischen Basisfunktionen einerseits mit den unterschiedlichen Betriebsfunktionen und Teilbetriebsfunktionalitäten andererseits, welche das eigentliche Betriebsverhalten des Fahrzeugs bestimmen, verwoben. Notwendige bzw. gewünschte Veränderung von Funktionen oder das nachträgliche Einfügen von Funktionen lassen bei solchermaßen verwobenen Softwarelösungen sehr komplexe Systemausbildungen, insbesondere der Schnittstellen, entstehen.

Aus der DE 100 44 319 A1 der Anmelderin ist bereits die abstrakte Idee bekannt durch die klare Trennung von Betriebs- und Basisfunktionen und die Einführung einer Systemschicht bzw. Zwischenschicht mit offener Schnittstellenfunktion eine Optimierung zu erzielen. Dabei wird von einem elektronischen System für ein Fahrzeug bzw. von einer Systemschicht des elektronischen Systems ausgegangen, wobei das elektronische System erste Komponenten zur Durchführung von Steuerungsaufgaben bei Betriebsabläufen des Fahrzeuges und zweite Komponenten, welche ein Zusammenwirken der ersten Komponenten zur Durchführung der Steuerungsaufgaben koordinieren, umfasst. Die ersten Komponenten führen dabei die Steuerungsaufgaben durch Verwendung von Betriebsfunktionen und Basisfunktionen aus. Vorteilhafterweise wird das System derart aufgebaut, dass Basisfunktionen und Betriebsfunktionen bzw. Teilbetriebsfunktionalitäten (als Betriebsteilmodule oder Plug-Ins bezeichnet) klar voneinander getrennt werden, wobei die Basisfunktionen in einer Basisschicht zusammengefasst sind. Zweckmäßigerweise wird dann die Systemschicht auf der Basisschicht, welche die Basisfunktionen enthält, aufgesetzt. Die Systemschicht bzw. Zwischenschicht enthält dabei wenigstens zwei der zweiten Komponenten, welche das Zusammenwirken der Steuerungskomponenten koordinieren. Dabei ist in bzw. bei der Systemschicht wenigstens eine offene Schnittstelle zu den Betriebsfunktionen vorgesehen, wodurch die Systemschicht die Basisfunktionen mit beliebigen Betriebsfunktionen derart verbindet, dass die Betriebsfunktionen modular eingebunden und/oder verwendet bzw. modular an das elektronische System angebunden werden können. Damit werden die Betriebsfunktionen bzw. die Betriebsteilmodule modular einbindbar in das elektronische System, wieder verwendbar und jederzeit austauschbar bzw. veränderbar. Durch die Systemschicht wird eine definierte Schnittstelle festgelegt, um im Rahmen der Steuergeräte-Software für beliebige Betriebsfunktionen eine Variantenbildung sowie Erweiterungen bzw. Veränderungen der Funktionalität, insbesondere durch Betriebsteilmodule, so genannte Plug-Ins, zu ermöglichen. In einer Ausgestaltung kann damit ein System, welches sich bereits in Serie bzw. im Einsatz oder Betrieb befindet, jederzeit weiterentwickelt, verändert und/oder durch Hinzufügung neuer Betriebsfunktionen erweitert werden. Damit können sinnvollerweise Steuerungsaufgaben bzw. spezifische Leistungsmerkmale eines elektronischen Systems sehr flexibel und individuell entworfen, entwickelt bzw. implementiert werden. Außerdem können zusätzlich die Überwachungsfunktionen bezüglich der Betriebsfunktionen und/oder der Betriebsteilmodule in der Systemschicht eingebunden werden. Durch diese Modularisierung der Software- und Überwachungsmnktionalitäten ergibt sich die Möglichkeit, beispielsweise von Dritten erstellte Software mit geringem Aufwand in das elektronische System einzubinden. Dies erlaubt auch, spezifische Varianten ausschließlich innerhalb der Betriebsfunktionen bzw. der Betriebsteilmodule darzustellen, während die Systemschicht anwendungsunabhängig gestaltet werden kann. Nachteilig ist hierbei, dass lediglich formale Vorgaben gemacht werden und konkrete, inhaltliche Vorgehensweisen nicht angegeben sind.

### Vorteil der Erfindung

Ausgehend vom geschilderten Stand der Technik sollen ein Computersystem und ein Verfahren zur Steuerung, insbesondere zur koordinierten Antriebsstrangsteuerung von Kraftfahrzeugen, geschaffen werden, welche über konkrete inhaltliche Vorgehensweisen verfügen.

Die Erfindung schlägt ein Computersystem mit den Merkmalen der Patentansprüche 1 und 25 sowie ein Verfahren mit den Merkmalen der Patentansprüche 8, 12 und 19 vor. Vorteilhafte Ausgestaltungen der Erfindung sind Gegenstand der Unteransprüche und der nachfolgenden Beschreibung.

Dabei werden erfindungsgemäß insbesondere
- Anforderungen verschiedener Systeme in einheitlicher Art auf Basis von Systemführungsgrößen (im Wesentlichen dem Getriebeausgangsmoment) zentral eingebracht,
- verschiedenste Verfahren zur Ermittlung von geeigneten Betriebspunkten des Antriebsstranges eingebracht,
- die Anforderungen und Verfahren entsprechend der aktuellen Fahrsituation durch ein abstraktes Priorisierungsverfahren situationsgerecht priorisiert, so dass die richtige Anforderung berücksichtigt und das optimale Verfahren zur Betriebspunktauswahl verwendet wird,
- die Anforderungen entsprechend der Triebstrangtopologie des betreffenden Fahrzeuges umgerechnet und Vorgaben an die Triebstrangkomponenten gemacht, wobei die Schnittstellen zu den Komponenten so abstrakt wie möglich auf physikalischer Basis festgelegt werden, um Abhängigkeiten beispielsweise von verschiedenen Motortypen (Diesel und Benzin) weitestgehend auszuschalten, und
- die Möglichkeit geboten, die Ermittlung von Anforderungen und Verfahren zur Berechnung von optimalen Betriebspunkten in Plug-Ins zusammenzufassen, um so separierbare Systeme im Sinne von veräußerbaren Produkten zu schaffen.

Zur funktionsfähigen Umsetzung eines modulartigen Systemaufbaus ist es erforderlich eine Softwarearchitektur anzugeben, in der den einzelnen Elementen bzw. Komponenten klare Funktionen zugewiesen sind. Unter dem abstrakten Begriff der Architektur wird sowohl die Systematik der Strukturierung eines komplexen Systemverbundes als auch deren konkrete Umsetzung verstanden. Aus diesem Grund wird erfindungsgemäß ein Computersystem mit wenigstens einem Prozessor und wenigstens einem Speicher zur Steuerung, insbesondere zur Antriebsstrangsteuerung für ein Kraftfahrzeug, angegeben, welches über eine entsprechende Softwarearchitektur verfügt. Diese besteht aus den nachfolgenden Elementen bzw. Komponenten: ein "Operation System and Specific Services" mit Betriebssystem und spezifischen Diensten als Basis für alle anderen Elemente und Anwendungen, einer "Basic Functionality" zur Umsetzung universeller Anforderungen, wobei Grundfunktionen eines Steuergerätes, beispielsweise der Ansteuerung von Aktoren eines Verbrennungsmotors, in der Basic Functionality bewerkstelligt werden, einem "Layer" zur Koordinierung von Aufgaben für Basisfunktionalitäten der Basic Functionality und zum Einbinden von Plug-Ins und wenigstens einem Plug-In zur Umsetzung von konkreten Aufgaben bzw. Funktionen, die über die Basisfunktionalität der Basic Functionality hinausgehen und vom Layer koordiniert werden.

Dabei können vorteilhafterweise die Plug-Ins am Computersystem modulartig ausgetauscht werden, wodurch das Computersystem flexibel an unterschiedliche Hersteller- und Kundenwünsche anpassbar ist und Funktionen einfach implementierbar sind. Dadurch können die in den Plug-Ins realisierten Kunden-Funktionen auf einfache und vorteilhafte Weise auf verschiedene Fahrzeugtypen oder unterschiedliche Motoren übertragen werden, ohne diese selbst verändern zu müssen. Die Anpassung an eine veränderte Fahrzeugkonfiguration wird durch Anpassungen beispielsweise in der Basic Functionality (z.B. Dieselstatt Benzinmotor) vorgenommen.

Des Weiteren können durch diesen modulhaften Aufbau auch neue Teilfunktionen einfach in das Computersystem eingefügt werden. Dadurch ist beispielsweise auch ein Softwaresharing möglich.

Außerdem sind vorteilhafterweise in der Softwarearchitektur auch offene Schnittstellen (open interfaces), auf die von außen zugegriffen werden kann, und geschlossene Schnittstellen (encapsulated interfaces), die nach außen nicht freigegeben sind, integriert.

Als Plug-Ins kommen zur Umsetzung von beispielsweise verschiedenen charakteristischen Eigenschaften von Fahrzeugen beispielsweise ein ACC Request (Adaptive Cruise Control Request) zur Anpassung der Geschwindigkeit oder des Abstandes des Fahrzeuges, ein Drivers Demand (comfort bzw. sport) zur Auslegung und Interpretation des Fahrpedals, Driveability zur Festlegung eines globalen Optimierungskriteriums, z. B. Fahrkomfort oder Sport, sowie Shift Strategy (comfort bzw. sport), die aus dem Sollwert für das Drehmoment am Getriebeausgang und der Fahrzeuggeschwindigkeit den Sollwert für die Getriebeübersetzung und das Motormoment bestimmt.

Im Layer sind beispielsweise die Koordinatoren Vehicle Coordinator, Vehicle Motion Coordinator und Powertrain Coordinator integriert. Jeder Koordinator sollte mit den Plug-Ins kommunizieren können, d. h. über Schnittstellen mit den Plug-Ins verbunden sein. Des Weiteren sollte der Layer über Schnittstellen zur Kommunikation mit der Basic Functionality verbunden sein, welche Basisfunktionen enthält, die wie Sensoren oder Aktoren agieren, wobei z. B. das engine management als Momentensteller wirkt, das transmission management ein Übersetzungsverhältnis umsetzt, das brake management eine geforderte negative Sollbeschleunigung einstellt.

Anforderungen verschiedener Systeme werden in einheitlicher Art auf Basis von Systemführungsgrößen, z. B. Getriebeausgangsmoment, zentral eingebracht. Das erfindungsgemäße Computersystem erlaubt es damit durch den einfachen Austausch oder das Hinzufügen von Funktionen, die in Plug-Ins enthalten sind, ein Kraftfahrzeug flexibel an verschiedene Anforderungen anpassen zu können. Dadurch können die Automobilhersteller eine Markendifferenzierung auf Softwarebasis einführen, weil allein aufgrund unterschiedlicher Softwarekomponenten Fahrzeuge mit unterschiedlichen Eigenschaften zur Verfügung stehen. Des Weiteren können auch die Kosten in erheblichem Maße reduziert werden, weil zum Anpassen an neue Funktionen nicht das gesamte Computersystem ausgetauscht werden muss, sondern lediglich durch den kostengünstigen Austausch einzelner Plug-Ins die Eigenschaften verändert werden können.

Um im beschriebenen erfindungsgemäßen Computersystem auf einfache Weise die gewünschte einfache Austauschbarkeit von Funktionen in den Plug-Ins erreichen zu können, ist es erforderlich, dass die übrigen Komponenten der Softwarearchitektur unabhängig von der Anzahl und der Funktionsweise der Plug-Ins auf die Plug-Ins zugreifen können. Nur so können Plug-Ins beliebig ausgetauscht werden. Ein erfindungsgemäßes Priorisierungsverfahren von Informationsgebern, z. B. Plug-Ins, zur Steuerung, insbesondere zur koordinierten Antriebsstrangsteuerung für ein Kraftfahrzeug, setzt diese Zielsetzung um. Das Priorisierungsverfahren ist beispielsweise auch im eben genannten Computersystem einsetzbar. In den Plug-Ins bzw. Anforderern ist in Abhängigkeit von der aktuellen Fahrsituation ein Anforderungswunsch enthalten, wobei jedoch nicht bei jeder bestimmten Fahrsituation im entsprechenden Plug-In oder Anforderer auch ein Anforderungswunsch enthalten sein muss. Die Anforderer oder Plug-Ins werden nach dem Grad ihrer Priorität aufsteigend oder abfallend sortiert, wobei diese Priorität in Abhängigkeit von globalen Optimierungskriterien bestimmt wird, beispielsweise einer Ökoabstimmung, Sportabstimmung oder einer Wintererkennung. In dieser entsprechend sortierten Liste mit Anforderern oder Plug-Ins werden die einzelnen Anforderer sequentiell beginnend mit dem Anforderer mit der höchsten Priorität abgearbeitet, d. h. es wird abgefragt, ob ein Anforderungswunsch im Anforderer bzw. im Plug-In vorliegt. Sobald ein Anforderer einen Anforderungswunsch enthält, wird das Abarbeiten abgebrochen, und der in diesem Anforderer enthaltene Anforderungswunsch ausgewählt, vorzugsweise gespeichert und weitergeleitet. Jeder Anforderer in den sortierten Listen kann durch eine Identität (ID), vorzugsweise als Zahl, und der Position in der Liste eindeutig gekennzeichnet sein.

In einem weiteren erfindungsgemäßen Priorisierungsverfahren von Informationsgebern, z. B. Plug-Ins, werden in einer Liste mit Anforderem bzw. Plug-Ins alle Anforderer in beliebiger Reihenfolge abgearbeitet, wobei diese Liste nicht nach Prioritäten sortiert ist und das Abarbeiten hier beispielsweise auch sequentiell erfolgen kann. Daran anschließend wird der Anforderungswunsch in der Liste der Anforderer mit dem maximalen (minimalen) Anforderungswunsch oder der durchschnittliche Anforderungswunsch der Anforderer ermittelt. Dieser maximale (minimale) Anforderungswunsch wird anschließend gespeichert und weitergeleitet.

Zur Ermittlung des maximalen (minimalen) Anforderungswunsches wird im Allgemeinen das nachfolgend beschriebene Schema verwendet. Die in der nicht sortierten Liste enthaltenen Anforderer bzw. Plug-Ins werden in beliebiger Reihenfolge abgefragt. Der erste abgefragte Anforderungswunsch, der von einem einen Anforderungswunsch enthaltenden Plug-In stammt, wird zunächst zwischengespeichert. Jeder weitere abgefragte Anforderungswunsch wird mit dem zwischengespeicherten Anforderungswunsch verglichen, ob er größer (kleiner) ist als der zwischengespeicherte Anforderungswunsch. Falls ein abgefragter Anforderungswunsch größer (kleiner) ist als der zwischengespeicherte Anforderungswunsch, wird dieser abgefragte Anforderungswunsch zwischengespeichert und der vorhergehende Anforderungswunsch gelöscht, d. h. der bisher gespeicherte Wert wird vom aktuell abgefragten Wert überschrieben, wobei andernfalls keine Speicherung erfolgt, d. h. der bisher zwischengespeicherte Anforderungswunsch gespeichert bleibt. Nach der Abfrage aller Anforderer ist der maximale (minimale) Anforderungswunsch zwischengespeichert und kann weitergeleitet werden.

Hierbei kann in einer Variante bei bestimmten Anforderern, z. B. Anforderern, die Motor und Bremse ansteuern, mit einem bestimmten Anforderungswunsch, z. B. einem Bremseingriff, der minimale (maximale) Anforderungswunsch, z. B. der minimale Vortriebswunsch, ausgewählt werden und andernfalls der maximale (minimale) Anforderungswunsch.

In einer weiteren Variante des eben beschriebenen Priorisierungsverfahrens nach maximaler (minimaler) Auswahl ist es auch möglich, dass einzelne Anforderer bzw. Plug-Ins bewirken, dass bestimmte andere Anforderer bei der Ermittlung des maximalen (minimalen) Anforderungswunsches nicht berücksichtigt werden. Beispielsweise kann ein Anforderer-Fahrpedal bewirken, dass alle anderen Anforderer, die eine Bremsung/Verzögerung bewirken, nicht berücksichtigt werden.

Jeder Anforderer bzw. ein Plug-In ist durch eine Identität (ID), vorzugsweise eine Zahl, für das Abarbeiten eindeutig gekennzeichnet. Das bedeutet, dass die Position in der Liste nicht von Bedeutung ist. Auch bei diesem Priorisierungsverfahren gibt es verschiedene Listen zum Anpassen an globale Optimierungskriterien, z. B. Ökoabstimmung, Sportabstimmung oder Wintererkennung, wobei jedoch hier nur relevant ist, welche Anforderer in der Liste stehen.

Beide eben beschriebenen Priorisierungsverfahren können auch miteinander kombiniert werden, wobei vorzugsweise das erstbeschriebene Priorisierungsverfahren zuerst eingesetzt wird und, falls dieses kein Ergebnis liefert, das zweite Priorisierungsverfahren angewendet wird. Das erste Priorisierungsverfahren liefert keinen Anforderungs wunsch, falls in der entsprechenden Liste in keinem der Anforderer bzw. Plug-Ins ein Anforderungs wunsch enthalten ist.

Zur koordinierten Antriebsstrangsteuerung eines Kraftfahrzeuges ist es erforderlich, den komplizierten Prozess dieser Steuerung in einzelne Verfahrensschritte aufzuteilen, welche von einem entsprechenden Computersystem bzw. der Software umgesetzt werden können. Ein erfindungsgemäßes Verfahren zur koordinierten Antriebsstrangsteuerung eines Kraftfahrzeuges verfügt im Wesentlichen über die nachfolgenden Schritte bzw. Phasen:
1. Charakterisierung der Umwelteinflüsse,
2. Festlegen eines globalen Optimierungskriteriums, z. B. sportlich, ökonomisch oder verschleißschonend,
3. Fahrerwunschinterpretation,
4. Bestimmung des optimalen Betriebspunktes und
5. Anfahren des optimalen Betriebspunktes.

Zur Charakterisierung des Umwelteinflusses im 1. Schritt werden aktuelle Umweltdaten aufbereitet und ggf. typisiert, z. B. Fahrzeuggrößen (Geschwindigkeit, Querbeschleunigung), Triebstrangzustand (Kraftschluss und Schub/Zug), Fahrertyperkennung (sportlich oder ökonomisch durch Ableiten aus dem Fahrverhalten) und Fahrsituationserkennung (Berg, Kurve, Winter, Stadt, Autobahn). Im 2. Schritt wird ein globales Optimierungskriterium festgelegt. Bei der Fahrerwunschinterpretation als 3. Verfahrensschritt wird eine Vorgabe für die Längsbewegung des Fahrzeuges beispielsweise aus der Fahrpedalinterpretation nach Beschleunigung/Verzögerung und/oder den Vorgaben eines Fahrgeschwindigkeitsreglers oder ACCs abgeleitet, wobei eine Systemführungsgröße Getriebeausgangsmoment in eine Größe Getriebeausgangsmoment für den Antriebsstrang und eine Größe Fahrzeugverzögerung für die Bremse aufgeteilt wird. Zur Bestimmung des optimalen Betriebspunktes im 4. Verfahrensschritt für ein Getriebeausgangsmoment wird ein bestimmtes Motonnoment und eine Getriebeübersetzung ermittelt. Das Anfahren des optimalen Betriebspunktes im 5. und letzten Verfahrensschritt wird innerhalb einer bestimmten Zeit durchgeführt, d. h. das Anfahren erfolgt nicht abrupt oder möglichst schnell, sondern wird an bestimmte Kriterien, beispielsweise der Fahrbarkeit, Komfort, Sicherheit und dem Aggregateschutz angepasst. In diesen Phasen werden vorzugsweise die einzelnen Aufgaben der Phasen bzw. Schritte von Koordinatoren in einem Layer eines erfindungsgemäßen Computersystems bearbeitet. Die Inhalte der Phasen werden von den Plug-Ins über Schnittstellen übermittelt bzw. zur Verfügung gestellt, wobei vorzugsweise die Auswahl der Plug-Ins nach einem der oben beschriebenen erfindungsgemäßen Priorisierungsverfahren erfolgt.

Zur Schaffung eines Computersystems zur Steuerung ist es zweckmäßig über ein objektorientiertes Softwaresystem zu verfügen. Ein objektorientiertes Softwaresystem ist dahingehend strukturiert, dass die Software einzelnen Teilen bzw. Komponenten des zu steuernden Gegenstandes oder Zustandsgrößen bzw. auch Aufgaben zugeordnet wird. In einem Kraftfahrzeug sind das beispielsweise das Fahrzeug, die Fahrzeugbewegung, der Motor, das Getriebe oder der Fahrertyp sowie die Fahrzeuggröße. Das erfindungsgemäße Computersystem mit wenigstens einem Prozessor/Speicher mit objektorientiertem Softwaresystem besteht im Wesentlichen aus den nachfolgenden objektorientierten Komponenten: Fahrzeugbewegung (Vehicle Motion, VM), Antriebsstrang (Powertrain, PT), Fahrzeugkoordinator (Vehicle Coordinator, VC), Infogebern, beispielsweise Umweltgrößen (Environment Data, ED), Fahrzustandsgrößen (Driving Condition Data, DD), Fahrzeuggrößen (Vehicle Data, VD) und Benutzergrößen (User Data, UD). In Infogebern werden aktuelle Zustandsgrößen gespeichert. Diese objektorientierten Komponenten sind mit Schnittstellen nach außen und innen (Interface In and Out) und einem Kriterienkoordinator (Criteria Coordinator, CC) zur Abfrage von Plug-Ins zur Kommunikation mit Schnittstellen verbunden. Die Komponente Fahrzeugbewegung weist z. B. noch die Komponenten Traktions- und Fahrstabilitätssysteme (ESP), Fahrzeugbewegungskoordinator (Vehicle Motion Coordinator, VMC) und Vortrieb/Bremsen (Propulsion/Brake, PrB) auf. Diese Komponente Vortrieb/Bremse weist z. B. noch die Komponenten Vortrieb (Propulsion System, PrSy), Bremssystem (Brake System, BrSy) und einen Vortriebs- und Bremskoordinator (Propulsion and Brakes Coordinator, PrBC) mit einer Komponente Beschleunigungsaufteiler (Acceleration Request Manager, AccRM) auf. Der Beschleunigungsaufteiler entscheidet bei einer negativen Beschleunigung (Verzögerung) welcher Anteil vom Motor und welcher Anteil von der Bremse übernommen wird. Die Komponente Antriebsstrang weist beispielsweise die Komponenten Antriebsstrangkoordinator (Powertrain Coordinator, PTC), Motor (Engine, Eng), Getriebe (Transmission, Tra) und den Infogeber Triebstrangzustandsgrößen (Powertrain Data, PD) auf. Der Kriterienkoordinator kann mit einer Anwendungsschnittstelle (Application Programming Interface, API) kommunizieren. Damit wird erfindungsgemäß ein objektorientiertes Softwaresystem zur Verfügung gestellt, welches optimal an einen modulartigen Systemaufbau angepasst ist.

In einer weiteren Ausgestaltung wird das oben beschriebene erfindungsgemäße Verfahren mit 5 Phasen mit dem erfindungsgemäßen Computersystem mit objektorientiertem Softwaresystem umgesetzt. Es weist die nachfolgenden Schritte auf:
- Zur Charakterisierung der Umwelteinflüsse werden die aktuellen Umweltdaten bzw. Zustandsgrößen den Infogebern zugewiesen, worauf alle anderen Komponenten zugreifen können, ausgenommen die Triebzustandsgrößen, worauf nur der Antriebsstrang zugreifen kann.
- Im 2. Verfahrensschritt wird vom Fahrzeugkoordinator das Festlegen eines globalen Optimierungskriteriums gesteuert, welcher Vorschläge über den Kriterienkoordinator von ausgewählten Plug-Ins abfragt.
- Im nächsten Verfahrensschritt wird vom Vortriebs- und Bremskoordinator die Fahrwunschinterpretation gesteuert, welche in Zusammenarbeit mit ausgewählten Plug-Ins über den Kriterienkoordinator die Vorgaben für Bremse und Antriebsstrang ermittelt, wobei vorzugsweise der Fahrzeugsbewegungskoordinator diese Vorgaben mit den Traktions- und Fahrstabilitätssystem koordiniert und diese Vorgaben an den Triebstrang bzw. das Bremssystem weitergibt, wobei über die Anwendungsschnittstelle beispielsweise eine Fahrbeschleunigung in ein Getriebeausgangsmoment umgerechnet wird und an den Antriebsstrang weitergeleitet wird.
- Im 4. Verfahrensschritt werden vom Antriebsstrangkoordinator zum Bestimmen des optimalen Betriebspunktes über den Kriterienkoordinator Plug-Ins ausgewählt und der Antriebsstrangkoordinator kommuniziert mit den Plug-Ins über den Kriterienkoordinator.
- Im 5. und letzten Schritt wird auf Basis der gleichen Vorgehensweise das Anfahren - damit ist der Übergang vom aktuellen zum neuen Betriebspunkt gemeint - des neu gewählten Betriebspunktes bestimmt.

Vorzugsweise erfolgt bei diesem Verfahren die Auswahl der Plug-Ins mit einem der oben beschriebenen erfindungsgemäßen Priorisierungsverfahren. Dieses Verfahren gestattet somit mit Hilfe des objektorientierten Softwaresystems das erfindungsgemäße Verfahren zur Steuerung eines Fahrzeuges auszuführen.

Teil der Erfindung sind auch die Computerprogramme mit Programmcodemitteln oder Computerprogrammprodukte mit Programmcodemitteln, die auf einem lesbaren Datenträger gespeichert sind, um eines der erfindungsgemäßen Verfahren durchzuführen, sofern das Computerprogramm auf einem Computer oder einer entsprechenden Recheneinheit ausgeführt wird.

### Zeichnungen

Nachfolgend wird die Erfindung beispielhaft beschrieben. Dabei zeigen:
- Fig. 1:: ein Schema eines "intelligenten" Fahrzeuges der Zukunft,
- Fig. 2:: einen schematisierten Entwicklungsprozess eines modulartigen Systemaufbaus,
- Fig. 3:: eine an der Fahrzeugtopologie ausgerichtete strukturierte Funktionsarchitektur,
- Fig. 4:: eine schematisierte Übersicht auf eine erfindungsgemäße Softwarearchitektur des modulartigen Systemaufbaus,
- Fig. 5:: eine schematisierte beispielhafte Konkretisierungsform der erfindungsgemäßen Systemarchitektur des modulartigen Systemaufbaus,
- Fig. 6:: eine schematisierte Ansicht der symbolischen Ausstattung eines Kraftfahrzeuges als Versuchsträger,
- Fig.7:: eine erfindungsgemäße Softwarearchitektur mit Plug-In-Design in einer Schichtenansicht,
- Fig.8:: einen erfindungsgemäßen schematisierten inneren Aufbau eines Vehicle Motion Coordinators aus Fig. 7,
- Fig. 9:: eine grafische Darstellung einer erfindungsgemäßen linearen Priorisierung (erste Stufe) und einer erfindungsgemäßen Maximal-Auswahl (zweite Stufe),
- Fig. 10:: ein erfindungsgemäßes Ablaufschema eines Priorisierungsverfahrens als Kombination aus linearer Priorisierung (erste Stufe) und Maximal-Auswahl (zweite Stufe),
- Fig. 11:: ein erfindungsgemäßes Verfahren zur koordinierten Antriebsstrangsteuerung in einer Darstellung zwischen Plug-Ins und Triebstrangkomponenten,
- Fig. 12:: eine erfindungsgemäße Softwarestruktur für das erfindungsgemäße Verfahren zur koordinierten Antriebsstrangsteuerung,
- Fig. 13:: ein erfindungsgemäßes objektorientiertes Softwaresystem zur koordinierten Antriebsstrangsteuerung,
- Fig. 14:: eine schematisierte Darstellung der Phasen des erfindungsgemäßen Verfahrens zur koordinierten Antriebssteuerung,
- Fig. 15:: ein Softwaresystem gemäß Fig. 13 bei der Auswahl des Optimierungskriteriums,
- Fig. 16:: einen beispielhaften Priorisierungsablauf entsprechend Fig. 15 zur Auswahl des Optimierungskriteriums durch den Fahrzeugkoordinator,
- Fig. 17:: eine schematisierte Strukturierung gemäß Fig. 13 bei der Fahrwunschinterpretation,
- Fig. 18:: einen beispielhaften Priorisierungsablauf analog Fig. 16 bei der Fahrwunschinterpretation,
- Fig. 19:: eine beispielhafte Anforderung eines Plug-Ins,
- Fig. 20:: eine schematisierte Strukturierung gemäß Fig. 13 zur Bestimmung des optimalen Betriebspunktes,
- Fig. 21:: einen beispielhaften Priorisierungsablauf entsprechend Fig. 20 zur Bestimmung des optimalen Betriebspunktes,
- Fig. 22:: Eine schematisierte Strukturierung gemäß Fig. 13 zum Anfahren des optimalen Betriebspunktes,
- Fig. 23:: einen beispielhaften Priorisierungsablauf entsprechend Fig. 22 zum Anfahren des optimalen Betriebspunktes und
- Fig. 24:: eine schematisierte Strukturierung gemäß Fig. 13 bei der Benutzung einzelner Plug-Ins von verschiedenen Schnittstellen.

### Bevorzugte Ausführungsform

Ein modulartiger Systemaufbau (auch unter Cartronic des Unternehmens Bosch bekannt) für alle Steuerungs- und Regelungsaufgaben im Fahrzeug ist eine offene Systemarchitektur.

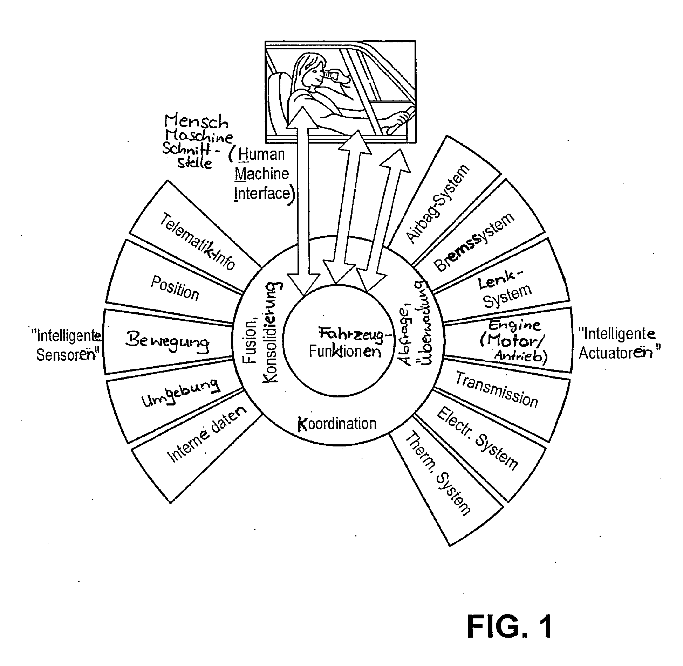

Die dem modularen Systemaufbau zugrunde liegende Vision gliedert das intelligente Fahrzeug der Zukunft in drei wesentliche Elemente, siehe Fig. 1:
- Intelligente Sensoren erfassen alle für den Fahrzeugbetrieb wichtigen Informationen. Hierzu gehören z. B. Sensoren zur Erfassung von Bewegungsdaten wie Geschwindigkeit, Beschleunigung und Drehrate, Sensoren für fahrzeuginterne Größen wie Temperaturen und Drücke und zukünftig auch vermehrt Sensoren zur Erfassung des Fabrzeugumfelds (z. B. Ultraschall, Radar, Video).
- Intelligente Aktoren setzen die erforderlichen Stellbefehle sicher und zuverlässig um. Intelligente, elektronisch gesteuerte Aktoren sind z. B. der Antriebsstrang, bestehend aus Verbrennungsmotor und Getriebe zur Erzeugung des Vortriebsmoments, elektronisch geregelte Bremssysteme zur definierten Verzögerung und Stabilisierung des Fahrzeugs und elektronisch geregelte Lenksysteme für eine sichere und feinfühlige Spurführung. Diese Eingriffe werden künftig vermehrt "by wire" elektronisch gesteuert und überwacht erfolgen.
- Eine Mensch-Maschine-Schnittstelle (Human-Machine-Interface, HMI) gibt dem Fahrer die für ihn in der jeweiligen Fahrsituation relevanten Informationen und erlaubt die sichere und komfortable Bedienung des Fahrzeugs über die Bedienelemente des Cockpits.

Die heutigen Fahrzeuge sind in der Regel durch "gewachsene" Elektronik-Strukturen mit einer Vielzahl isolierter und autarker Einzelfunktionen und Steuergeräte gekennzeichnet. Die Entwicklung ist damit meist auf eine Optimierung der isolierten Einzelfunktionen und Subsysteme begrenzt, die Optimierung des Gesamtsystems gestaltet sich schwierig.

Zur Realisierung der Vision vernetzter Systeme im Fahrzeug wird daher eine durchgängige, konsistente, modulare und offene Systemarchitektur erforderlich. Ziel der Systemarchitektur ist die nahtlose Integration aller Teilsysteme zur effizienteren Darstellung übergeordneter Fahrzeugfunktionen, welche ein Zusammenwirken mehrerer Teilsysteme erforderlich machen. Weitere Ziele sind Flexibilität hinsichtlich unterschiedlicher Fahrzeug- und Steuergerätekonfigurationen, einfachere Implementierung kundenspezifischer Funktionen, sowie hohe Funktionssicherheit und Wiederverwendbarkeit von entwickelten Softwarekomponenten.

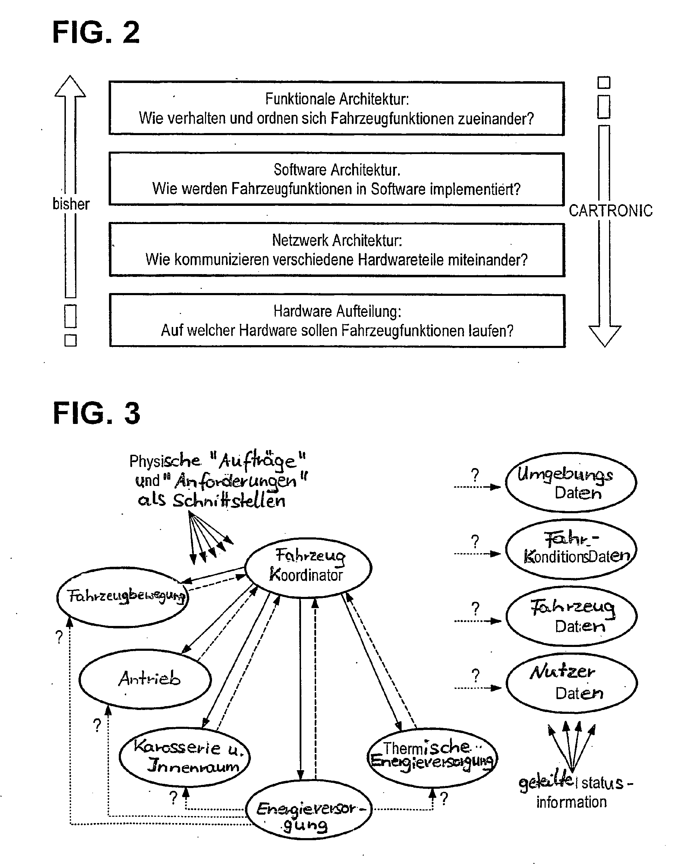

Unter dem abstrakten Begriff "Architektur" soll im Folgenden sowohl die Systematik der Strukturierung des komplexen Systemverbundes als auch deren konkrete Umsetzung verstanden werden. Zur Beschreibung der "Architektur" lassen sich unterschiedliche "Sichten" unterscheiden, die jeweils durch eigene Beschreibungen (im Sinne unterschiedlich abstrakter bis konkreter Modelle) abgebildet werden, welche in den einzelnen Stufen eines Entwicklungsprozesses erzeugt und umgesetzt werden, siehe Fig. 2.

Grundlage der Systemarchitektur des modulartigen Systemaufbaus ist eine an der Fahrzeugtopologie ausgerichtete, hierarchisch klar strukturierte Funktionsarchitektur, siehe Fig. 3. Die Funktionsarchitektur beschreibt Ordnung und Zusammenhang von logisch-modularen Funktionskomponenten: ihren Aufgaben, ihren Schnittstellen, sowie ihren Wechselwirkungen untereinander. Wesentliche Elemente der Funktionsarchitektur sind Domänen, (Sub-)Systeme, funktionale Komponenten und Kommunikationsbeziehungen. Das resultierende abstrakte Modell ist noch unabhängig von einer Implementierung mit einer speziellen Hardwaretopologie.

Die Funktionsarchitektur unterteilt das Fahrzeug in unterschiedliche "Domänen": Fahrzeugbewegung (Powertrain), Antrieb (Vehicle Motion), Karosserie und Innenraum (Body and Interior), elektrische Energieversorgung (Electrical Supply System), thermische Energieversorgung (Thermal Supply System) usw. Innerhalb jeder Domäne werden unterschiedliche Subsysteme identifiziert, die aus "funktionalen Komponenten" bestehen, welche über Kommunikationsbeziehungen miteinander in Wechselwirkungen stehen. Der Begriff "Komponente" meint dabei nicht zwangsläufig die physikalische Einheit im Sinne eines Bauteils, sondern eine Funktionseinheit, die sich ggf. als Subsystem in weitere funktionale Unterkomponenten zerlegen lässt.

Jedes der Subsysteme koordiniert seine Unterkomponenten selbst, die Koordination zwischen Teilsystemen übernehmen spezielle Funktionskomponenten, die als Koordinatoren bezeichnet werden.

Bei den Kommunikationsbeziehungen werden die vier Grundtypen Aufträge, Anforderungen, Rückmeldungen, und Abfragen unterschieden. Eine Anforderung ist der Wunsch zur Ausführung einer Aufgabe, während ein Auftrag mit der Pflicht zur Ausführung verbunden ist. Während ggf. mehrere unterschiedliche funktionale Komponenten ähnliche und auch konfliktäre Anforderungen stellen können (beispielsweise unterschiedliche Verbraucher ein Antriebsmoment eines Motors), erfolgt die Auftragserteilung durch genau einen Auftraggeber (z. B. einen Antriebsstrangkoordinator) an genau einen Auftragnehmer (z. B. den Verbrennungsmotor). Der Auftragnehmer gibt dem Auftraggeber gegebenenfalls eine Rückmeldung über die Ausführung.

Die Funktionsarchitektur kann grafisch oder auch durch UML-Modelle abgebildet werden. Unabhängig von der gewählten Beschreibungsform liefern die zugrunde liegenden Strukturierungsregeln insbesondere in der Phase der Systemanalyse eine konsistente Methode zur Beherrschung der Komplexität, und erlauben die systematische Definition funktionaler Schnittstellen.

Der nächste Schritt im Entwicklungsprozess besteht in der Umsetzung der Funktionsarchitektur in eine geeignete Softwarearchitektur. Die Softwarearchitektur beschreibt die Strukturen der Software des Systems, sie besteht aus Softwarekomponenten, die in sich in weitere Software-Unterkomponenten unterteilt werden können. Der Funktionsumfang einer Softwarekomponente muss im Allgemeinen nicht zwangsläufig mit einer funktionalen Komponente des modulartigen Systemaufbaus gleichgesetzt werden. Die funktionale Strukturierung von Komponenten des modulartigen Systemaufbaus unterstützt aber ein objektbasiertes Softwaredesign.

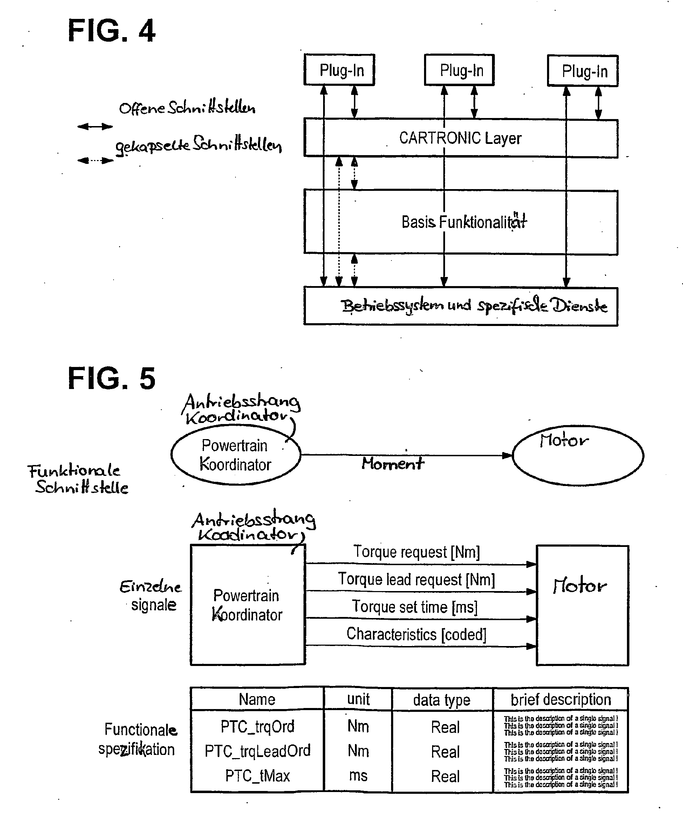

Fig. 4 zeigt eine produktorientierte, schematisierte Übersicht auf eine auf dem modulartigen Systemaufbau basierende erfindungsgemäße Softwarearchitektur. Vereinfacht lassen sich folgende Elemente unterscheiden:
- "Operation System and Specific Services" mit Betriebssystem und spezifischen Diensten als Basis für alle Anwendungen, die auf dem Steuergerät laufen sollen;
- "Basic Functionality" bezeichnet Grundfunktionen des Steuergeräts zur Umsetzung universeller Anforderungen (z. B. Ansteuerung der Aktoren eines Verbrennungsmotors). Die Basisfunktionalitäten werden aus der Funktionsarchitektur ermittelt und strukturiert;
- "Layer": diese Softwarekomponente führt die Koordinationsaufgaben für mehrere Basisfunktionalitäten durch und bindet Plug-Ins ein;
- "Plug-In": diese Softwarekomponenten setzen konkrete, separierbare Aufgaben um, die über die Basisfunktionalität hinausgehen und durch die Komponente Layer koordiniert werden.

In dieser Aufteilung können offene und gekapselte Schnittstellen (open and encapsulated interfaces) unterschieden werden. Gekapselte Schnittstellen sind nach außen nicht freigegeben, während auf offene Schnittstellen frei zugegriffen werden kann. Die Modularität dieser Softwarearchitektur unterstützt die Austauschbarkeit von Teilfunktionalitäten und ermöglicht damit ein Softwaresharing.

Für die Implementierung des Systemverbunds spielt die Aufteilung von Funktionen auf konkrete Steuergeräte und die Abbildung von Kommunikationsbeziehungen auf eine Netzwerktopologie eine entscheidende Rolle. Während im traditionellen Ansatz "gewachsener" Systeme typischerweise im ersten Schritt die Aufteilung der Steuergeräte und deren Vernetzung vorgegeben wurde und sich Funktions- und Softwarearchitektur an diesen Gegebenheiten ausrichten musste, unterstützt der modulartige Systemaufbau hier einen systematischen simultanen Entwicklungsprozess.

Der modulartigen Systemaufbau erlaubt durch die zugrunde liegende Koordination verteilter Systeme eine flexible Systemrealisierung sowohl in dezentral verteilten als auch zentral konzentrierten Steuergeräteaufteilungen. Auch hinsichtlich der Verwendung spezifischer Bussysteme und Kommunikationsstandards erlaubt der modulartige Systemaufbau durch Kapselung der damit verbundenen Schnittstellen eine hohe Flexibilität.

Die je nach Marktsegment und Hersteller spezifisch unterschiedlichen Topologien werden daher vom modulartigen Systemaufbau mit einem hohen Wiederverwendungsgrad von Funktions- und Softwarekomponenten unterstützt.

Wie die vorhergehenden Ausführungen gezeigt haben, bilden klar definierte, standardisierte Schnittstellen ein Kernelement für die Bewältigung der Herausforderungen eines Systemverbundes.

Die Systemarchitektur unterstützt die Erarbeitung universeller Schnittstellen. Je nach Sicht lassen sich dabei unterschiedliche Konkretisierungsformen unterscheiden, siehe Fig. 5:
- Funktionale Schnittstellen (basic functional interface), die ausgehend von einer vereinfachten Form (Beispiel: die Momentenanforderung an den Verbrennungsmotor) in abstrakte Signalschnittstellen detailliert werden (Beispiel: die Detaillierung der Momentenanforderung in Form eines momentanen Sollmoments (torque request), einem längerfristigen Führungsmoment (torque lead request), und z. B. weiteren Dynamik- und Statusinformationen (torque set time, characteristics),
- konkrete Softwareschnittstellen innerhalb eines Steuergeräts, wobei die funktionalen Schnittstellen durch softwaretechnische Anforderungen ergänzt werden (Beispiel: die Codierung der Momentenanforderung in Form von Variablennamen, Datentypen, Skalierungen, Amplituden- und Zeitquantisierung für momentanes Sollmoment, Führungsgröße, Dynamik- und Statusinformationen),
- sowie konkrete Signalschnittstellen auf einem Bus zwischen Steuergeräten (Beispiel: die Codierung der Momentenanforderung in Form von Signalnamen, Datentypen, Skalierungen, Amplituden- und Zeitquantisierung sowie Busadressen für momentanes Sollmoment, Führungsmoment, Dynamik- und Statusinformationen).

Ein wesentlicher Vorteil besteht darin, dass die unterschiedlichen Schnittstellenformen transparent zugeordnet und ineinander überführt werden können. Damit kann zum Zeitpunkt der Entwicklung einer Softwarefunktion eine weitgehende Unabhängigkeit der Software-Schnittstellen vom tatsächlichen Transportmechanismus der Information (innerhalb eines Steuergeräts oder über einen Bus) sichergestellt werden. Durch Kapselung spezifischer Teilsystemeigenschaften lässt sich außerdem sicherstellen, dass die Schnittstellen unabhängig von der technischen Ausführungsform der verbundenen Teilsysteme sind. Ein Beispiel bildet die Momentenschnittstelle zum Verbrennungsmotor, welche universell sowohl für Benzinals auch Dieselmotoren geeignet ist.

Diese Architektur unterstützt die nahtlose funktionale Integration unterschiedlicher elektronischer Fahrzeugsysteme. Darüber hinaus erlaubt das Plug-In-Konzept die Implementierung von Softwaremodulen zur charakteristischen Auslegung des Fahrverhaltens.

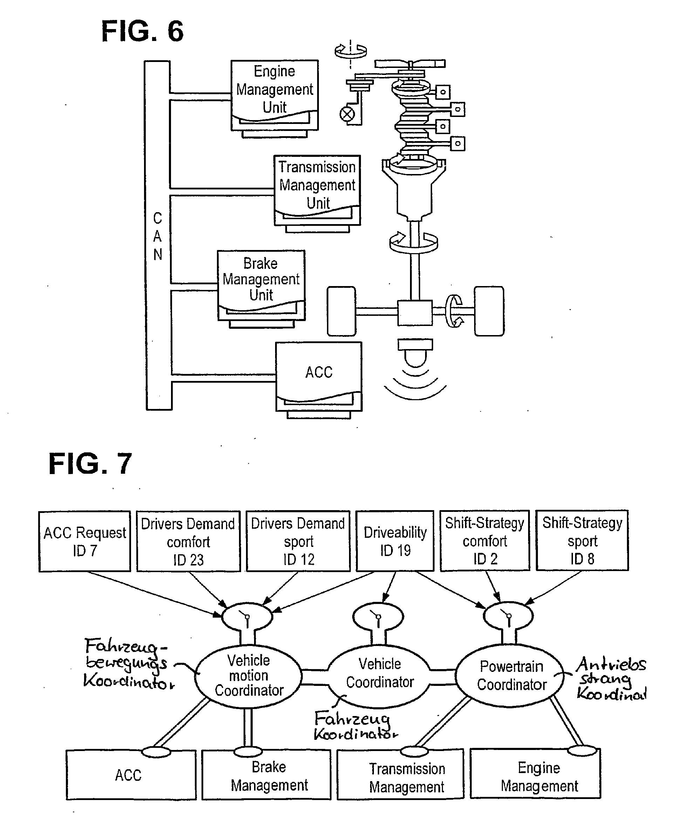

Fig. 6 zeigt symbolisch die Ausstattung eines Fahrzeugs. Die Motorsteuerung EMU (Engine Management Unit) ist mit den Sensoren und Aktuatoren des Motors sowie mit dem Sensor des Fahrpedalmoduls verbunden. Ferner verfügt das Fahrzeug über ein Bremsensteuergerät BMU (Brake Management Unit), eine elektronische Getriebesteuerung TMU (Transmission Management Unit) sowie ein ACC-Steuergerät, welches die Signale des Radarsensors verarbeitet. Ein CAN- (Controller Area Network) Bus verbindet die Steuergeräte untereinander.

Die Ausstattung erlaubt die flexible Konfiguration für unterschiedliche Fahrzeugcharaktere, nachfolgend exemplarisch in zwei Ausprägungen als "sportlich" und "komfortabel" bezeichnet. Ein Schalter im Fahrzeuginnenraum ermöglicht es dem Fahrer, zwischen diesen beiden Fahrzeugcharakteren umzuschalten. Im Unterschied zu herkömmlichen Implementierungen derartiger Fahrzeugcharakteristiken, beruht die Unterscheidung nicht nur auf unterschiedlichen Parameter-Applikationen innerhalb der Einzelsysteme, es werden vielmehr auf einer übergeordneten Ebene Software-"Plug-In"-Funktionalitäten zur Anpassung des Gesamtsystemverhaltens herangezogen, welche über Schnittstellen die jeweils hinsichtlich Software und Abstimmung unveränderten Einzelsysteme ansprechen.

Um den Komfortcharakter beispielsweise einer Limousine der Premiumklasse darzustellen, wurden exemplarisch folgende Anforderungen gestellt:

Das Fahrzeug soll ein Adaptive Cruise Control (ACC) System erhalten. Dieses System ermöglicht eine Anpassung der Geschwindigkeit an eine Fahrervorgabe sowie des Abstandes an vorausfahrende Fahrzeuge, indem Antrieb und Bremse elektronisch angesteuert werden. ACC ist ein innovatives Ausstattungsmerkmal, das den Premiumcharakter unterstreicht und den Fahrkomfort erhöht.

Elektronische Bremseingriffe für ACC und andere Längsregelsysteme (wie z. B. einem Fahrgeschwindigkeitsregler mit Bremseingriff) sollen über das Bremssteuergerät (BMU, Brake Management Unit) möglich sein.

Das Fahrzeug soll sich bei der Gasannahme "weich" anfühlen, d. h. ein ruckartiges Anfahren soll vermieden werden. Ebenso sollen Lastwechsel "sanft" erfolgen, d. h. die Eigendynamik des Triebstranges soll für den Fahrer unter keinen Umständen spürbar sein. Die Getriebeschaltung soll auf einen eher ökonomischen Betrieb ausgerichtet sein, d. h. der Motor soll vorrangig bei niedrigen Drehzahlen betrieben werden.

Im sportlichen Fahrzeugcharakter wurden als oberstes Ziel der Fahrspaß optimiert. Entsprechend dem vorgegebenen Fahrzeugcharakter sollten Getriebe- und Motorsteuerung wie folgt ausgelegt werden:

Der Motor soll spontan Gas annehmen, d. h. die Fahrpedalinterpretation soll "scharf" appliziert sein. Lastwechsel sollen schnell erfolgen können, d. h. die Dämpfung zur Unterdrückung der Triebstrangdynamik ist sekundär bezüglich der Spontaneität. Der Motorbetriebspunkt soll zu Gunsten hoher Drehzahlen ausgelegt sein, damit der Fahrer jederzeit über eine möglichst hohe Leistungsreserve verfügt.

Zur Demonstration der hohen Flexibilität wird bei dieser Auslegung auf Einbindung des Komfortfeatures "ACC" verzichtet.

Fig. 7 zeigt die verwendete erfindungsgemäße Softwarearchitektur zur Umsetzung mit Plug-In Design in der Schichtenansicht:

Die oberste Schicht wird von sechs Plug-Ins gebildet, welche die charakteristischen Funktionen zur Umsetzung der Anforderungen an die zwei Fahrzeugcharaktere enthalten:
- ACC Request:
   ein Regelkreis sorgt für die Anpassung der Geschwindigkeit oder des Abstandes. Der Regler ist typischerweise Bestandteil der ACC-Steuerung und hat eine Beschleunigung als Stellgröße. ACC-Request übernimmt diese und speist sie als Anforderung in den Vehicle Motion Coordinator ein.
- Drivers Demand comfort bzw. sport (in Fig. 7 getrennt dargestellt):
   ein elektronisches Fahrpedal wird in dieser Komponente ausgewertet und als Vortriebsmoment am Getriebeausgang interpretiert. Diese Funktion hat starken Einfluß auf das Fahrverhalten und damit auf den Markencharakter. Das comfort Plug-In enthält eine weiche Fahrpedalinterpretation, während die sportliche Variante scharf ausgelegt ist, d. h. ein hohes Drehmoment bei vergleichsweise kleinem Fahrpedalweg. Das berechnete Vortriebsmoment am Getriebeausgang wird über die Schnittstelle als Anforderung an den Vehicle Motion Coordinator gestellt.
- Driveability:
   dient u. a. der Festlegung eines globalen Optimierungskriteriums, also in einem Fall "Fahrkomfort" und in dem anderen "Sport". Ein weiterer Bestandteil dieser Komponente sind die Komfortfunktionen zur Lastschlagfilterung, d. h. Änderungen im Sollmoment werden so gedämpft, dass kein störendes Ruckeln oder Schwingungen im Triebstrang auftreten. Diese Gradientenbegrenzung verhindert die Erregung von Triebstrangschwingungen im Bereich der Eigenfrequenzen. Über eine Schnittstelle kann dem Vehicle Motion Coordinator ein minimaler und maximaler Gradient des Antriebssollmoments vorgegeben werden. Darüber hinaus wertet Driveabilty den Schalter aus, mit dem zwischen dem sportlichen und komfortablen Fahrzeugcharakter umgeschaltet werden kann. Als Alternative zu einem Schalter könnte hier ebenfalls eine Fahrertyperkennung realisiert werden. Der ausgewählte Modus wird anschließend an den Vehicle Coordinator weitergeleitet. Ein weiteres Feature ermöglicht, bei Gangwechseln den Ruck durch gezielte Steuerung des Motormoments zu vermeiden, indem ein minimal und ein maximal einzuhaltendes Motormoment an Powertrain Coordinator übergeben werden.
- Shift Strategy comfort bzw. sport (in Fig. 7 getrennt dargestellt):
   enthält eine Rechenvorschrift, die aus dem Sollwert für das Drehmoment am Getriebeausgang und der Fahrzeuggeschwindigkeit den Sollwert für die Getriebeübersetzung und das Motormoment bestimmt. Um die Vorgabe des Sollmoments zu erfüllen, ergibt sich bezüglich aktueller Geschwindigkeit ein Freiheitsgrad in der Wahl des Übersetzungsverhältnisses. Das Übersetzungsverhältnis wird entweder zugunsten eines ökonomischen Motorbetriebspunktes (Shift-Strategy comfort) oder zugunsten einer hohen Leistungsreserve (Shift-Strategy sport) gewählt. Sowohl der Sollwert für das Übersetzungsverhältnis als auch für das Motormoment werden an den Coordinator Powertrain gesendet. Darüber hinaus ist eine Funktion zur Unterdrückung von Pendelschaltungen enthalten. Über die gemeinsame Schnittstelle werden dem Powertrain Coordinator ein minimal bzw. maximal zulässiger Gang vorgegeben, welche bei Schaltungen einzuhalten sind.

Unterhalb der Plug-Ins befindet sich in Fig. 7 der Layer, welcher die Koordinatoren Vehicle Coordinator, Vehicle Motion Coordinator und Powertrain Coordinator umfaßt. Jeder Koordinator verfügt über beliebig viele Ausführungen einer klar definierten fixen Schnittstelle zur Kommunikation mit den Plug-Ins. Für jedes Plug-In, das mit einem Koordinator kommunizieren möchte, stellt dieser eine weitere Ausführung seiner Schnittstelle zur Verfügung. In diesem Fall ist z. B. Vehicle Motion Coordinator insgesamt mit drei Plug-Ins verbunden: ACC Request, Drivers Demand und Driveability. Die einheitlichen Schnittstellen ermöglichen die Darstellung eines breiten Spektrums an Funktionalität in den Plug-Ins. Während die Koordinatoren die Plug-Ins mit allen globalen Fahrzeugdaten versorgen, sind die Schnittstellen in umgekehrter Richtung - also vom Plug-In zu den Koordinatoren - dagegen vergleichsweise schmalbandig. Häufig kommt es innerhalb eines Koordinators zu Konflikten zwischen konkurrierenden Anforderungen (z. B. gleichzeitiger Vortriebswunsch von ACC und über Fahrpedal). Diese können mithilfe eines flexiblen Priorisierungsverfahrens zu Gunsten einer vorgebbaren Strategie entschieden werden. In einer applizierbaren Priorisierungstabelle wird festgelegt, welche Plug-Ins aufgerufen werden. Das Prinzip dieses Priorisierungsverfahrens wird nachfolgend am Beispiel des Vehicle Motion Coordinator verdeutlicht.

Mit der tiefer gelegenen Softwareschicht der Basic Functionality ist der Layer über Standard-Schnittstellen verbunden. Diese Basisfunktionen verhalten sich aus Sicht des Layers wie intelligente Sensoren oder Aktuatoren. Zum Beispiel fungiert die Komponente Engine Management als ein Momentensteller, Transmission Management setzt das befohlene Übersetzungsverhältnis um, Brake Management stellt die geforderte Sollbeschleunigung ein und ACC liefert die Daten aus Objekterkennung und ACC-Bedienteil.

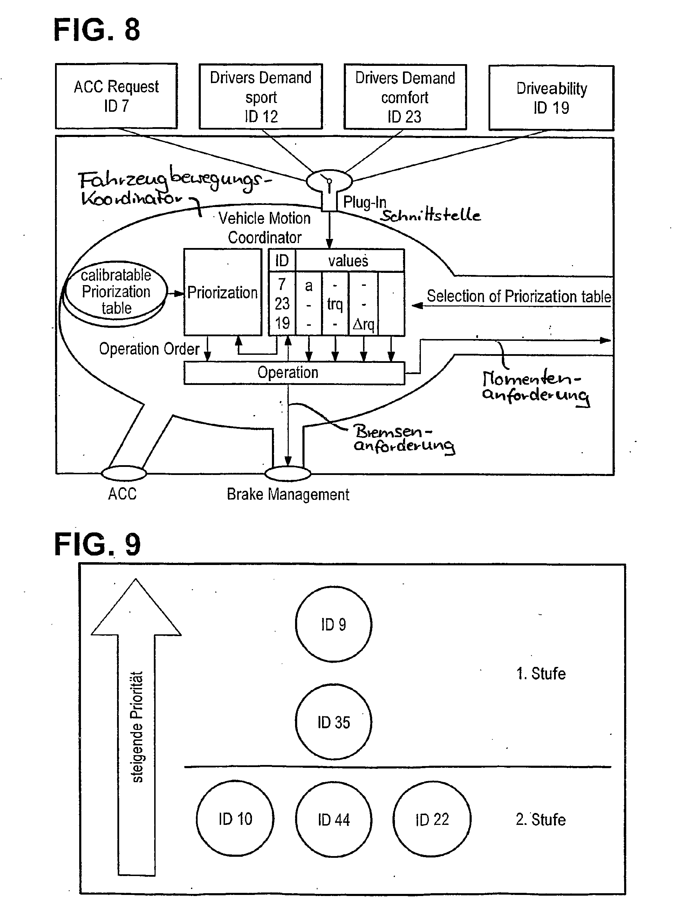

Fig. 8 zeigt den inneren Aufbau des Vehicle Motion Coordinators aus Fig. 7. Über einheitliche Schnittstellen werden die Informationen der Plug-Ins in einen Puffer eingelesen. Die Schnittstelleninformation besteht jeweils aus der Identität (ID), die jedes Plug-In eindeutig kennzeichnet, sowie einen Nutzanteil (values), welcher die Funktionalität bestimmt. Zum Beispiel hat ACC Request die ID 7 und sendet eine Beschleunigungsanforderung (a), Drivers Demand sport (ID 12) sendet ein Vortriebsmoment am Getriebeausgang (trq) und Driveability (ID 19) eine obere und unter Grenze für den Gradienten des Vortriebsmoments am Getriebeausgang (trq). Ein geeignetes Priorisierungsverfahren (Priorization), in diesem Fall eine lineare Priorisierung, legt die Abarbeitungsreihenfolge (Operation Order) der Anforderungen aus den Plug-Ins fest und teilt das Ergebnis der ausführenden Instanz (Operation) mit. Die Prioritäten können für jede ID in einer Priorisierungstabelle bzw. -liste (calibratable Priorization table) appliziert werden. Zur Darstellung unterschiedlicher Fahrzeugcharaktere können gleichzeitig mehrere Priorisierungstabellen abgelegt sein, z. B. für "Sport" und für "Comfort". In diesem Fall enthält beispielsweise die Priorisierungstabelle für "Comfort" lediglich den Aufruf des Plug-Ins Drivers Demand comfort (ID 23), während z. B. das Plug-In Drivers Demand sport (ID 12) nicht aufgerufen wird. Umgekehrt enthält die Priorisierungstabelle für einen sportlichen Fahrbetrieb nur einen Eintrag der Plug-Ins Drivers Demand sport (ID 12) und Driveability (ID 19), wobei ACC-Request (ID 7) gezielt nicht berücksichtigt wird. Die Auswahl der Priorisierungstabelle wird von Vehicle Coordinator getroffen. Die ausführende Einheit (Operation) ruft die Anforderungen der Plug-Ins nach Vorgabe der Operation Order auf und verarbeitet diese:

Im Ergebnis wird eine Sollbeschleunigung ermittelt, welche auf die Stellglieder Antrieb (Motor und Getriebe) oder Bremse verteilt wird. Im Fall einer Bremsung wird sie über die Schnittstelle zum Brake Management weitergeleitet. Im Antriebsfall wird die Beschleunigung mithilfe der Zugkraftgleichung in ein Sollmoment am Getriebeausgang umgerechnet, anschließend kommt es zur Koordination mit der Anforderung aus Drivers Demand. In der Regel setzt sich die Anforderung mit dem größeren Drehmomentenwunsch durch. In Ausnahmefällen (je nach Priorization table) kann es aber auch sinnvoll sein, dass zu Gunsten der Beschleunigungsanforderung des ACC entschieden wird. Zum Beispiel erweist es sich als komfortabel, eine Bremsverzögerung nicht schlagartig zu beenden, wenn eine aktive Bremsung des ACC vorliegt und der Fahrer gleichzeitig Gas gibt, d. h. wenn der Fahrer überreitet. Das resultierende Solhnoment am Getriebeausgang wird anschließend an den Vehicle Coordinator (siehe auch Fig. 7) weitergeleitet.

Der Vehicle Coordinator leitet das Sollmoment an den Powertrain Coordinator (siehe auch Fig. 7) weiter und legt die Berechnungsreihenfolge aller Koordinatoren fest. Darüber hinaus sorgt er für die Umsetzung der globalen Fahrstrategie. Diese wird von Driveability in Form eines globalen Optimierungskriteriums ("Komfort" oder "Sport") entsprechend der Schalterstellung bestimmt und über die gemeinsame Schnittstelle gesendet. Auf Grundlage des Optimierungskriteriums legt Vehicle Coordinator die zu verwendenden Priorisierungstabellen in den Koordinatoren fest.

Der Powertrain Coordinator setzt die Anforderung zur Realisierung eines Getriebeausgangmoments von Vehicle Coordinator um. Ähnlich wie in Coordinator Vehicle Motion wird anhand eines Priorisierungsverfahrens die Bearbeitungsreihenfolge der Anforderungen aus den Plug-Ins, Shift-Strategy comfort bzw. sport sowie Driveability bestimmt. Je nach ausgewählter Priorisierungstabelle wird nur eine der beiden Schaltstrategien über die ID aufgerufen. Transmission Management wird unter Berücksichtigung des minimal bzw. maximal zulässigen Gangs aus Shift-Strategy zur Umsetzung des Sollwerts beauftragt. Bei einem Gangwechsel wird das Motormoment nach vorgegebener unterer und oberer Grenze aus Driveability an die Basisfunktion Engine übergeben.

Alle Anforderungen an die Charaktere "sport" und "comfort" konnten mit insgesamt sechs Plug-Ins erfolgreich umgesetzt werden. Mit dem Schalter im Fahrzeuginnenraum kann während der Fahrt zwischen beiden Modi umgeschaltet werden. Die Integration des ACC-Systems in der "comfort"-Ausprägung erfolgte ohne Änderungen in dem Layer. Dies untermauert die Mächtigkeit der Schnittstellen zu den Plug-Ins und erlaubt die zukünftige Integration anderer Anwendungen wie z. B. einer situationsabhängigen Geschwindigkeitsbegrenzung oder Cruise Control mit Bremseingriff als Alternative zu ACC. Die standardisierten Schnittstellen der Layer mit den Basisfunktionen, wie z. B. Engine und Transmission, ermöglicht außerdem eine Entkopplung der Fahrfunktionen von den Aggregaten: sie ermöglichen die Verwendung der gleichen Fahrfunktionen für unterschiedliche Motortypen (Otto- und Dieselmotoren) und unterschiedliche Getriebetypen (z. B. für Stufenautomatikgetriebe und CVT).

Mit dem applizierbaren Priorisierungsverfahren werden auch dynamische Wechsel zwischen unterschiedlichen Fahrverhaltensmodi möglich, wenn dies - z. B. mit einer Fahrertyperkennung - gewünscht wird. Im vorliegenden Beispiel demonstriert der Wechsel zwischen den Typen sport und comfort der Plug-Ins Drivers Demand und Shift-Strategy die Flexibilität des Priorisierungsverfahrens für die Austauschbarkeit ganzer Algorithmen.

Im Gegensatz zu herkömmlichen Systemen, die lediglich unterschiedliche Charakterisierung des Fahrzeugverhaltens durch Parameteränderung in isolierten Teilsystemen erlauben, ermöglicht die erfindungsgemäße Systemarchitektur eine tief greifende, flexible Markencharakterisierung des Gesamtfahrzeugs durch Plug-Ins bei gleichzeitiger Wiederverwendung der zugrunde liegenden Software.

Es handelt sich um eine übergreifende, offene Systemarchitektur für alle Steuerungs- und Regelungsaufgaben im Kraftfahrzeug. Sie ist unabhängig vom Fahrzeugtyp und von der Steuergeräte-Konfiguration. Sie beruht auf einer klar gegliederten, hierarchischen Funktionsarchitektur und modularen Software mit offenen, einheitlichen Schnittstellen in den beteiligten Steuergeräten. Damit können die Aufgaben flexibel auf einzelne Hardware-Komponenten des elektronischen Systems verteilt werden. Es lassen sich die immer komplexeren Fahrzeugsysteme leichter beherrschen.

Am Beispiel wurde gezeigt, dass eine flexible Markencharakterisierung nach einem Top-Down Ansatz unterstützt wird. Die charakteristischen Funktionen für die Fahrbarkeit sind jeweils in einem Plug-In konzentriert. Ein applizierbares Priorisierungsverfahren ermöglicht die flexible Koordination der Plug-Ins. Es gelingt dadurch, mit geringem Softwareaufwand völlig unterschiedliche Fahrzeugcharaktere darzustellen. Definierte Schnittstellen erlauben die modulare Integration zusätzlicher Systemelemente. Das Plug-In Konzept erleichtert ein Softwaresharing, welches dem OEM (original equipment manufacturer, d. h. Automobilhersteller) die Möglichkeit gibt, seine Marke durch selbständig entwickelte Softwaremodule zu charakterisieren. Ein hohes Maß an Wiederverwendbarkeit der zugrunde liegenden Softwarekomponenten unterstützt die Anforderungen nach Kostengünstigkeit und Softwarequalität.

In Kraftfahrzeugen muss normalerweise zwischen unterschiedlichen Vortriebswünschen, die entweder vom Fahrer oder von Assistenzsystemen, z. B. FGR, ACC und ANB, kommen, gewählt werden. Die Steuergerätesoftware enthält einen Programmteil, der den wichtigsten Anforderer auswählt.

Während der Implementierung des Auswahlverfahrens ist bekannt, welche Systeme Anforderungen stellen können und wie sie untereinander gewichtet sind. Diese Anforderungen werden in einer starren Logik miteinander verknüpft.

Die bisher eingesetzten Verfahren haben den Nachteil, dass im Vorhinein bekannt sein muss, welches System Vortriebswünsche geben kann und welche Anforderungskombinationen es geben kann. Dadurch muss für jede Kombination von Systemen das Verfahren angepasst werden.

Ziel der Erfindung ist ein Verfahren, mit dem man die Auswahl der weitergeleiteten Anforderung bzw. des Wunsches, insbesondere des Vortriebswunsches, unabhängig von der Anzahl und der Funktionsweise der anfordernden Systeme treffen kann.

Mit Hilfe eines erfindungsgemäßen Priorisierungsverfahrens, insbesondere als lineare Priorisierung oder als Maximal-(Minimal-)Auswahl, kann die Auswahl eines weitergeleiteten Anforderers bzw. Plug-Ins unabhängig von der Anzahl und der Funktionsweise der anfordernden Systeme getroffen werden. Bei der linearen Priorisierung wird eine Liste bzw. Tabelle von Anforderern sequentiell beginnend mit dem Anforderer mit der höchsten Priorität abgearbeitet, wobei diese Liste für die lineare Priorisierung sortiert ist nach dem Grad der Priorität der Anforderer. Der Abbruch des Abfragens der Liste erfolgt, sobald ein Anforderer einen Anforderungswunsch enthält. Dieser Anforderer wird damit ausgewählt. Die übrigen noch nicht abgefragten Anforderer werden somit nicht berücksichtigt.

Bei der Max-(Min-)Auswahl werden alle Anforderer abgefragt, die in der Liste für die Max-(Min-) Auswahl stehen. Es wird derjenige Anforderer mit dem maximalen (minimalen) Anforderungswunsch ausgewählt.

Es können auch beide Verfahren beliebig miteinander kombiniert werden, beispielsweise indem zuerst eine lineare Priorisierung durchgeführt wird und daran anschließend eine Min-Auswahl, falls die lineare Priorisierung kein Ergebnis liefert.

Im Folgenden wird beispielhaft der Ablauf einer Auswahl eines Vortriebswunsches beschrieben. Das System beinhaltet z. B. die folgenden Anforderer:
- Fahrpedal (ID 10)
- Automatische Notbremse (ID 9)
- Bremspedal (ID 35)
- FGR (ID 44)
- Leerlaufregler (ID 22).

Das im Beispiel angewendete Verfahren, um den wichtigsten Vortriebswunsch zu ermitteln, besteht aus 2 Stufen:
- Lineare Priorisierung (z. B. als 1. Stufe)
   Hier wird eine Liste sequenziell durchgearbeitet und sobald ein Anforderer einen Anforderungswunsch hat, abgebrochen. Je höher ein Anforderer in der Liste steht, je höher ist seine Priorität,
- Max-Auswahl (z. B. als 2.Stufe)
   Es werden alle Anforderer abgefragt. Es wird der Wunsch mit beispielsweise dem höchsten Vortriebsmoment ausgewählt.

In Fig. 9 ist eine grafische Darstellung einer linearen Priorisierung (1. Stufe) und eine Max-Auswahl (2. Stufe) dargestellt. Bei der linearen Priorisierung hat der Anforderer ID9 (automatische Notbremse) die höchste Priorität und wird zuerst abgefragt. Der Anforderer ID35 (Bremspedal) hat eine nachgeordnete Priorität, d. h. er wird nachfolgend abgefragt. In der Max-Auswahl (2. Stufe) sind die Anforderer ID10 (Fahrpedal), ID44 (FGR) und ID22 (Leerlaufregler) gleichwertig auf der gleichen Prioiisierungsstufe und werden alle abgefragt. Der Wunsch mit z. B. dem höchsten Vortriebsmoment wird ausgewählt. Beide Verfahren können sowohl getrennt als auch in Kombination angewendet werden.

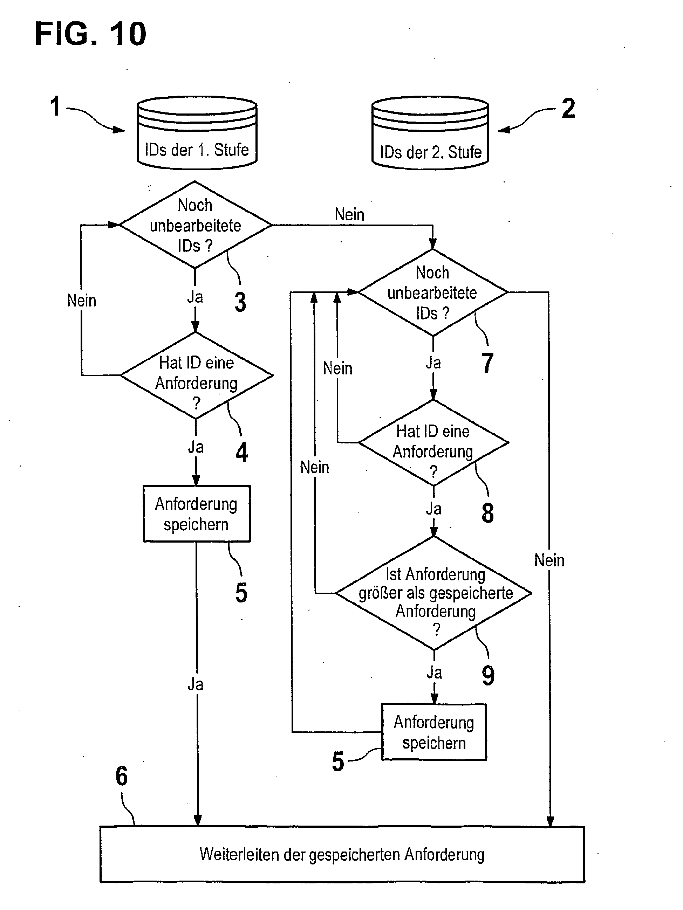

Fig. 10 zeigt ein Ablaufschema eines Priorisierungsverfahrens, wobei die lineare Priorisierung (1. Stufe) 1 mit der Max-Auswahl (2. Stufe) 2 miteinander kombiniert sind. Die linke Hälfte zeigt das lineare Priorisierungsverfahren 1 und die rechte Hälfte die Max-Auswahl 2. Im linearen Priorisierungsverfahren 1 wird im ersten Operationsschritt 3 zunächst abgefragt, ob noch unbearbeitete IDs vorhanden sind, z. B. entsprechend Fig. 9 ID9 und ID35. Im Operationsschritt 4 wird auf die Abfrage, ob eine ID eine Anforderung hat, bei "ja" die Anforderung gespeichert 5 und weitergeleitet 6 und damit das Verfahren bzw. Ablaufschema abgebrochen, falls "nein" wird zurückgehend auf den vorhergehenden Operationsschritt 3 erneut abgefragt, ob noch unbearbeitete IDs vorhanden sind und das Verfahren so lange fortgesetzt, bis einen ID mit Anforderung vorhanden ist. Die Bearbeitung der IDs erfolgt in der Reihenfolge ihrer Priorisierung, z. B. bei Fig. 9 ID9 und danach ID35. Falls keine der IDs in der 1. Stufe über eine Anforderung verfügt, wird zu den IDs der 2. Stufe übergegangen, z. B. in Fig. 9, ID10, ID44 und ID22.

In der 2. Stufe mit Max-Auswahl 2 wird im ersten Operationsschritt 7 abgefragt, ob noch unbearbeitete IDs vorhanden sind. Falls "ja", wird im nächsten Operationsschritt 8 abgefragt, ob ein ID eine Anforderung hat. Falls keine Anforderung vorhanden ist, wird auf den vorhergehenden Operationsschritt 7 zurückgegangen und falls "ja" wird im nächsten Operationsschritt 9 verglichen, ob der gerade abgefragte Anforderer größer ist als ein bereits gespeicherter Anforderer. Falls "nein", wird in Operationsschritt 7 zurückgesprungen, und falls "ja", wird die Anforderung gespeichert 5. Sind alle IDs der 2. Stufe abgefragt, d. h. in Operationsschritt 7 keine unbearbeiteten IDs mehr vorhanden, wird auf Operationsschritt 6 zum Weiterleiten der gespeicherten Anforderung gesprungen. Dadurch kann für die IDs der zweiten Stufe die größte Anforderung ermittelt und weitergeleitet werden, falls - da in Kombination mit der linearen Priorisierung verwendet - die IDs der 1. Stufe keine Anforderung enthalten.

Als weiteres Verfahren kommt z. B. noch eine Mittelwertbildung oder ein Kombination dieser Verfahren in Betracht. Vielen realen Anwendungsfällen wird dieses Verfahren nicht genügen. Im Folgenden sind 2 weitere Ausbaustufen des Systems beschrieben:
- Erweiterung um Min/Max-Auswahl
   Sobald die Anforderer nicht nur den Motor, sondern auch die Bremse ansteuern können, kommt man nicht mit dem im Beispiel beschrieben Verfahren aus, da ein Bremseneingriff gegebenenfalls eine höhere Priorität haben soll, als ein Beschleunigungseingriff. Um diesem Umstand Rechnung zu tragen, muss die 2. Stufe von einer Max-Auswahl in eine Min/Max-Auswahl verändert werden. Die Min/Max-Auswahl funktioniert wie folgt:
   Sobald ein Anforderer einen Bremseneingriff anfordert, gewinnt der niedrigste Vortriebswunsch (maximale Verzögerung). Wenn es keinen Bremseneingriff gibt, wird die maximale Beschleunigung ausgewählt.
- Erweiterung um Autoritäten
   Das oben beschriebene Verfahren entspricht nicht den zurzeit üblichen Verfahren, da das Fahrpedal einen Bremseingriff des FGR oder des ACC überstimmen kann. Aus diesem Grund kann das beschriebene Verfahren noch um eine Stufe erweitert werden, die Autoritäten genannt werden.
   Bei diesem Verfahren kann jeder Anforderer bestimmte Anforderungsbereiche während der Min/Max-Auswahl ausblenden. Das bedeutet, dass z. B. das Fahrpedal alle Bremseneingriffe ausblenden kann. Dadurch werden alle Bremseneingriffe während der Min/Max-Auswahl ignoriert, aber nicht z. B. die Bremse, die in der linearen Priorisierung angesiedelt wäre.

Um die IDs effizient zu handhaben, werden sie in Listen verwaltet, die sequenziell abgearbeitet werden. Ein Anpassen der Prioritäten auf globale Optimierungskriterien (z. B. Ökoabstimmung, Sportabstimmung oder Wintererkennung) kann erfolgen, wenn die IDs in 2-dimensionalen Listen verwaltet werden und je nach globalem Optimierungskriterium eine andere Reihe benutzt wird.

Wenn nun ein Anforderer hinzugefügt werden soll, so ist er in die richtigen Tabellen einzutragen und wird damit automatisch bei der nächsten Auswahl mit berücksichtigt.

Es muss ausgeschlossen werden, dass eine ungültige Anforderung an den Motor oder die Bremse weitergeleitet wird. Aus diesem Grund muss sichergestellt sein, dass das System entweder mit einem gültigen Wert vorinitialisiert wird oder es muss garantiert sein, dass bei jeder Auswahl immer mindestens ein Anforderer einen Wert anfordert.

Bei den anonymen erfindungsgemäßen Priorisierungsverfahren von Informationsgebern weiß das Auswahlverfahren nicht, welche Qualität der Anforderer hat. Die einzigen Informationen, die es hat, sind die ID und die Position in den jeweiligen Tabellen der Auswahlverfahren. Dies führt dazu, dass es keine inneren Abhängigkeiten von Anforderer und Auswahlsystem gibt. Ein derartiges Auswahlverfahren ist immer dann nötig, wenn man die Anzahl der Anforderer ändern können soll, ohne den Code des Auswahlverfahrens zu ändern. Dieses Verfahren kann z. B. in einer Motorsteuerung angewendet werden, wie das obige Beispiel zeigt. Es gibt aber noch viele weitere Produkte, bei denen dieses Verfahren Vorteile bringt.

Die Vorteile des Priorisienmgsverfahrens sind z. B.:
- keine Abhängigkeiten zwischen Auswahlverfahren und Anforderer und damit vermehrten Software Reuse des Auswahlverfahrens und der Anforderer (FGR, Fahrpedal, ...),
- verminderter Code- und Rechenzeitverbrauch bei komplexen Systemen (viele Anforderer), da das Auswahlverfahren unabhängig ist von Querbeziehungen der Anforderer,
- leichtere Erweiterbarkeit des Systems (Hinzufügen von weiteren Anforderern). Solange die Anforderer die angebotenen, abstrakten Schnittstelle benutzen können und genügend Speicherplatz für die ID-Tabellen reserviert worden ist, kann das System um beliebig viele Anforderer erweitert werden, ohne Programmcode ändern zu müssen.
- Wechsel zwischen Prioritätensätzen während der Laufzeit möglich und
- das System kann in Zukunft um eine dynamische Anmeldung von Anforderern erweitert werden.

Nachfolgend wird erfindungsgemäß eine weitere, konkrete inhaltliche Vorgehensweise für einen modulartigen Systemaufbau beschrieben.

Erfindungsgemäß wird ein Verfahren zur Steuerung, insbesondere ein Verfahren zur koordinierten Antriebsstrangsteuerung von Kraftfahrzeugen in 5 Phasen bzw. Schritte eingeteilt:
1. Charakterisierung der Umwelteinflüsse
2. Festlegen eines globalen Optimierungskriteriums
3. Fahrerwunschinterpretation
4. Optimalen Betriebspunkt bestimmen
5. Optimalen Betriebspunkt anfahren

Im 1. Schritt der koordinierten Antriebsstrangsteuerung werden aktuelle Umweltdaten aufbereitet, gegebenenfalls typisiert und zur Verfügung gestellt. Folgende Informationsgruppen sind z. B. von Interesse:
- Fahrzeuggrößen:
   allgemeine aktuelle Fahrzeugdaten wie Geschwindigkeit und Querbeschleunigung
- Triebstrangzustand:
   aktuelle Triebstrangdaten wie Kraftschluss und Schub/ Zug
- Fahrertyperkennung:
   beobachtet das Fahrverhalten und die Aktivitäten des Fahrers und leitet daraus einen abstrakten Typ ab (z. B. sportlich oder ökonomisch)
- Fahrsituationserkennung:
   zieht auf Grund abgeleiteter Signale Rückschlüsse auf die aktuelle Umwelt- oder Fahrsituation, z. B. Berg, Kurve, Winter, Stadt, Autobahn.

Im 2. Schritt wird festgelegt, woraufhin das gesamte nachfolgende Verfahren optimiert werden soll. Denkbar sind beispielsweise Kriterien wie sportliche Fahrweise, ökonomische Fahrweise oder besonders verschleißschonende Fahrweise. Der Vorteil der globalen Festlegung liegt in der anschließenden einheitlichen Verwendung in allen entscheidenden Funktionen von der Fahrpedalinterpretation bis zur Motormomenten- und Übersetzungsauswahl.

Die anschließende Fahrerwunschinterpretation im 3. Schritt hat die Aufgabe, die Vorgaben des Fahrers zu interpretieren und daraus eine Vorgabe für die Längsbewegung des Fahrzeugs abzuleiten. Das umfaßt neben der reinen Fahrpedalinterpretation nach Beschleunigung und Verzögerung beispielsweise auch die Vorgaben eines Fahrgeschwindigkeitsreglers oder eines ACC, die den Wunsch des Fahrers nach automatischer Fahrt mit konstanter Geschwindigkeit umsetzen. Eine Systemführungsgröße Getriebeausgangsmoment, die Beschleunigung und Verzögerung enthält, wird in eine Größe Getriebeausgangsmoment für den Antriebsstrang und eine Größe Fahrzeugverzögerung für die Bremse aufgeteilt.

Die Fahrerwunschinterpretation liefert als Ergebnis ein Getriebeausgangsmoment, das vom Antriebsstrang zur Verfügung gestellt werden soll (hinzu kommt noch die benötigte Nebenaggregateleistung). Hierfür muss nun ein optimaler Betriebspunkt im 4. Schritt bestimmt werden, wobei sich "optimal" am ausgewählten Optimierungskriterium (siehe 2. Schritt) orientieren sollte. Ein Betriebspunkt ergibt sich in einem konventionellen Antriebsstrang aus dem Motormoment und der Übersetzung des Getriebes, da sich die Motordrehzahl bei gegebener Fahrzeuggeschwindigkeit direkt daraus berechnen lässt. Für zukünftige Konzepte ergeben sich durch den Einbau weiterer Aggregate evt. noch weitere Freiheitsgrade (z. B. E-Maschine im 4-Quadranten-Betrieb).

Die letzte Aufgabe der koordinierten Antriebsstrangsteuerung ist das Anfahren des optimalen Betriebspunktes im 5. Schritt. Der aktuelle und der neue optimale Betriebspunkt können unter Umständen relativ weit "auseinander" liegen (z. B. wenn der Fahrer plötzlich ins Fahrpedal tritt). Um Fahrbarkeit, Komfort, Sicherheit und Aggregateschutz zu gewährleisten ist es daher häufig sinnvoll, keinen abrupten Übergang (so schnell wie möglich) zuzulassen, sondern den neuen Betriebspunkt gedämpft anzufahren.

Nach dem 5. Schritt steht der neue Betriebspunkt fest und die entsprechenden Vorgaben können an die Komponenten im Antriebsstrang ausgegeben werden.

In den Phasen 2 bis 5 wird die eigentliche inhaltliche Ausgestaltung der Aufgabe der Phase von Plug-Ins übernommen. Dazu wird von jeder Phase eine entsprechende Schnittstelle angeboten, über die (mindestens) ein oder mehrere Plug-Ins Vorschläge oder Anforderungen einbringen können. Diese Vorschläge werden zunächst durch ein phasenspezifisches, erfindungsgemäßes Priorisierungsverfahren miteinander verglichen und der ausgewählte Anforderungswunsch wird von der Phase anschließend tatsächlich als Vorgabe an die nächste Phase weitergegeben. Zur Priorisierung kommen verschiedene Verfahren zum Einsatz (einfache Rangfolge, Maximalauswahl, Mittelwertbildung und Kombinationen dieser Verfahren).

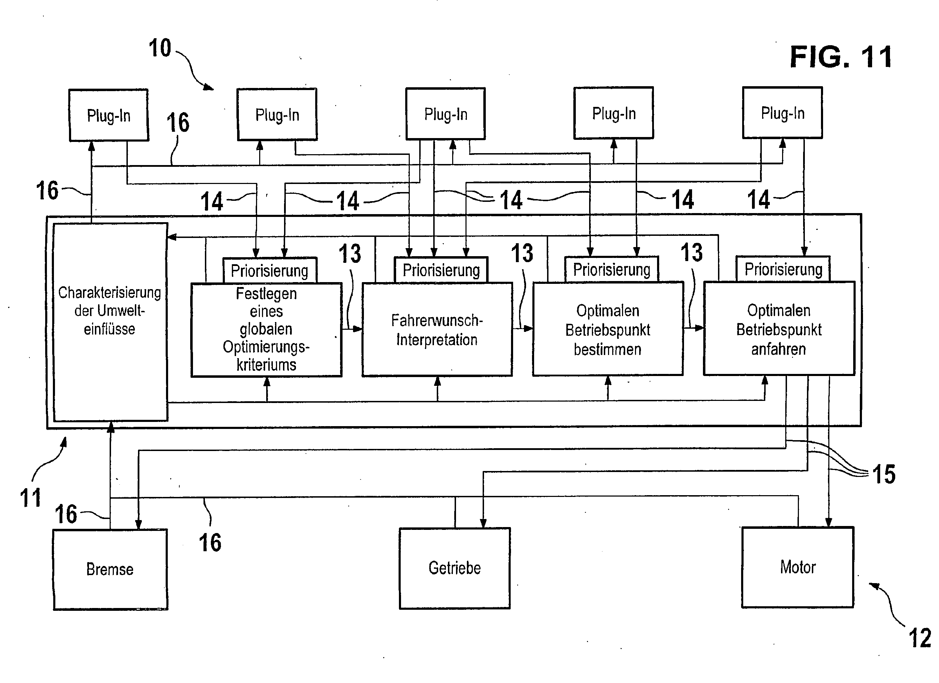

In Fig. 11 ist der erfindungsgemäße Ablauf noch einmal dargestellt. Der Ablauf der 5 Phasen ist im Sinne einer Zwischenschicht 11 (Layer, s. nächster Absatz) zwischen Plug-Ins 10 und Triebstrangkomponenten 12 dargestellt. Die Informationen, die von einer Phase an die nächste Phase weitergegeben werden, sind mit 13 markiert. Anforderungen und Vorgaben, die zu den einzelnen Phasen von den Plug-Ins gemacht werden, sind mit 14 gekennzeichnet. Die Vorgabe des in der letzten Phase endgültig festgelegten neuen Betriebspunktes an die Triebstrangkomponenten 12 ist mit 15 gekennzeichnet. Die Pfeile 16 kennzeichnen den Informationsfluss allgemeiner Zustandsgrößen und Fahrzeuggrößen, die innerhalb der Phasen oder Plug-Ins zur Bearbeitung ihrer Funktion verwendet werden können.

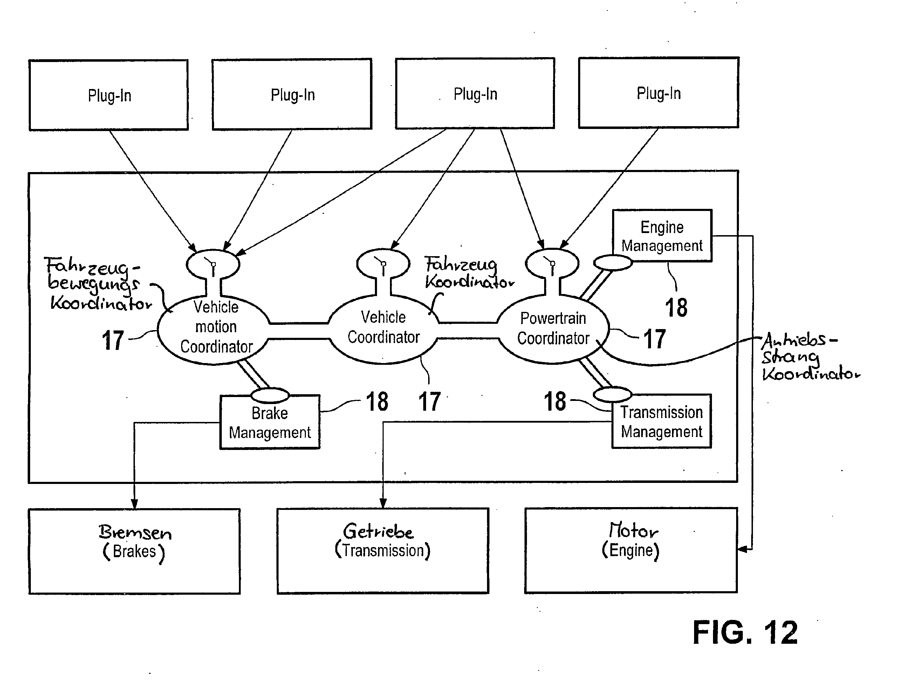

Zur Ausgestaltung der Phasen ist es günstig, eine entsprechend der Komponenten und Funktionen im Fahrzeug hierarchisch orientierte Struktur zu verwenden. Dazu wurde der modulartige Systemaufbau verwendet (s. Fig. 12). Diese bildet die Triebstrangtopologie in der Software ab und ermöglicht durch Mechanismen zur Austauschbarkeit die einfache Anpassung an Veränderungen der Fahrzeugkonfiguration. Die Aufgaben der 5 Phasen wurden auf die Koordinatoren 17 verteilt, die inhaltlich für diese Aufgabe vorgesehen sind. Zusätzlich sind so genannte "Interfaces" 18 eingefügt worden, die für die Kommunikation mit den physikalischen Komponenten Motor, Getriebe und Bremse sorgen.

Im Folgenden wird die Aufteilung der einzelnen Phasen innerhalb der erfindungsgemäßen Struktur aufgezeigt sowie der Ablauf der gesamten erfindungsgemäßen Antriebsstrangsteuerung noch einmal im Detail insbesondere mit Hilfe von Beispielen erläutert:

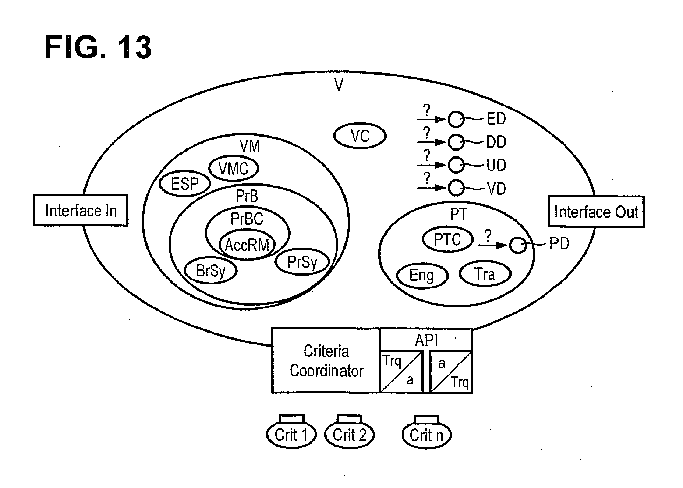

In Fig. 13 ist die hierarchische Strukturierung bzw. Architektur als erfindungsgemäßes objektorientiertes Softwaresystem zur koordinierten Antriebsstrangsteuerung dargestellt. Sie ist in Form ineinander geschachtelter Ellipsen bzw. Tropfen für Sofwarekomponenten aufgebaut, wobei eine in einer anderen größeren Ellipse angeordnete Softwarekomponente eine Teilmenge der größeren Softwarekomponente ist. Es besteht die objektorientierte Gesamtsoftware (Vehicle, V) im Wesentlichen aus Fahrzeugbewegung (Vehicle Motion, VM), welches für die Ermittlung und Koordination aller Längsdynamikanforderungen an das Fahrzeug verantwortlich ist, und dem Antriebsstrang (Powertrain, PT), der die Aufgabe hat, diese Anforderungen zu realisieren. Des Weiteren sind noch der Fahrzeugkoordinator (Vehicle Coordinator, VC), der Kriterienkoordinator (Criteria Coordinator, CC), die Schnittstellen nach innen und außen (Interface In and Out), die (spezielle) Anwendungsschnittstelle (Application Programming Interface, API) und die hier mit Fragezeichen gekennzeichneten Komponenten für Umweltgrößen (Environment data, ED), z. B. Winter, Fahrzustandsgrößen (Driving Condition Data, DD), z. B. Geschwindigkeit, Benutzergrößen (User Data, UD), z. B. Fahrertyp und Fahrzeuggrößen (Vehicle Data, VD) dargestellt. Die Führungsgröße, auf die sich das gesamte System bezieht, ist das Getriebeausgangsmoment.

Das System ist damit erweitert um Schnittstellen nach Außen (Interface In and Out), die andeuten sollen, dass die einzelnen Softwarekomponenten für eine funktionstüchtige Software auch mit den realen Komponenten verbunden und mit weiteren Steuersystemen vernetzt werden müssen, und dass hierfür ein spezieller softwaretechnischer Mechanismus genutzt wird.

Eine Sonderstellung nimmt die Schnittstelle (Criteria Coordinator) zu einer unbestimmten Anzahl Plug-In-Komponenten (Crit x) ein. Um das System einfach um beliebige Funktionen zur koordinierten Antriebsstrangsteuerung erweitern zu können, werden diese in Plug-Ins ausgelagert und kommunizieren mit dem System über eine definierte Schnittstelle. Wie die funktionale Aufteilung zwischen dem System und den Plug-Ins und die dazugehörige Kommunikation abläuft, wird an Hand der folgenden Figuren beschrieben.

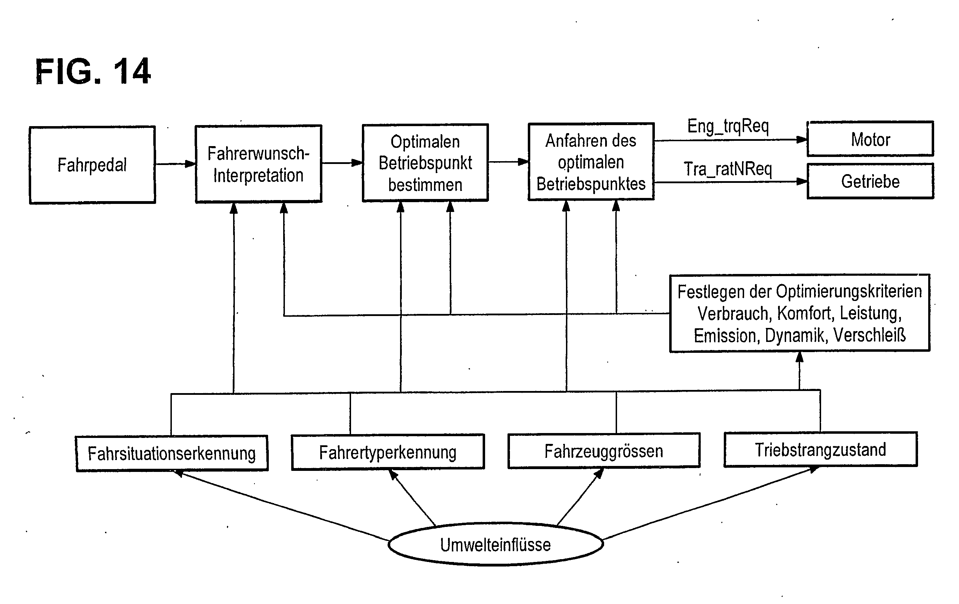

Figur 14 zeigt die 5 Schritte des erfindungsgemäßen Verfahrens zur Steuerung, insbesondere zur koordinierten Antriebsstrangsteuerung von Kraftfahrzeugen. Im 1. Schritt erfolgt die Charakterisierung der Umwelteinflüsse in der Informationsgruppe Fahrsituationserkennung, Fahrertyperkennung, Fahrzeuggrößen und Triebstrangzustand. Im 2. Schritt werden die Optimierungskriterien festgelegt, z. B. Verbrauch, Komfort, Leistung, Emission, Dynamik und Verschleiß. Anhand der Fahrpedalstellung wird im 3. Schritt die Fahrerwunschinterpretation durchgeführt. Im 4. Schritt wird der optimale Betriebspunkt bestimmt und im 5. Schritt angefahren, indem an Motor und Getriebe entsprechende Vorgaben gemacht werden.

In Fig. 14 werden im 1. Schritt der koordinierten Antriebsstrangsteuerung die aktuellen Umweltdaten bzw. Umwelteinflüsse aufbereitet, gegebenenfalls typisiert und zur Verfügung gestellt:
- Fahrzeuggrößen:
   allgemeine aktuelle Fahrzeugdaten wie Geschwindigkeit und Querbeschleunigung,
- Triebstrangzustand:
   aktuelle Triebstrangdaten wie Kraftschluss und Schub/Zug,
- Fahrertyperkennung:
   beobachtet das Fahrverhalten und die Aktivitäten des Fahrers und leitet daraus einen abstrakten Typ ab (z. B. sportlich oder ökonomisch),
- Fahrsituationserkennung:
   zieht auf Grund abgeleiteter Signale Rückschlüsse auf die aktuelle Umwelt- oder Fahrsituation, z. B. Berg, Kurve, Winter, Stadt, Autobahn.

Die Zuordnung der Charakterisierung der Umwelteinflüsse zur Architektur erfolgt an Hand Fig. 13. Die Fahrertyperkennung, Fahrsituationserkennung und Fahrzeuggrößen werden den Infogebern ED, DD, Ud und VD auf der obersten Ebene zugewiesen und sind daher für alle anderen Komponenten sichtbar, die Triebstrangzustandsgrößen pd (Powertrain Data) werden im Antriebsstrang ermittelt und können daher auch nur innerhalb des Antriebsstrangs direkt verwendet werden.

Im 2. Schritt wird entsprechend Fig. 14 festgelegt, woraufhin das gesamte nachfolgende Verfahren optimiert werden soll. Denkbar sind beispielsweise Kriterien wie sportliche Fahrweise, ökonomische Fahrweise oder besonders Verschleiß schonende Fahrweise. Der Vorteil der globalen Festlegung liegt in der anschließenden einheitlichen Verwendung in allen entscheidenden Funktionen von der Fahrpedalinterpretation bis zur Motormomenten- und Übersetzungsauswahl.

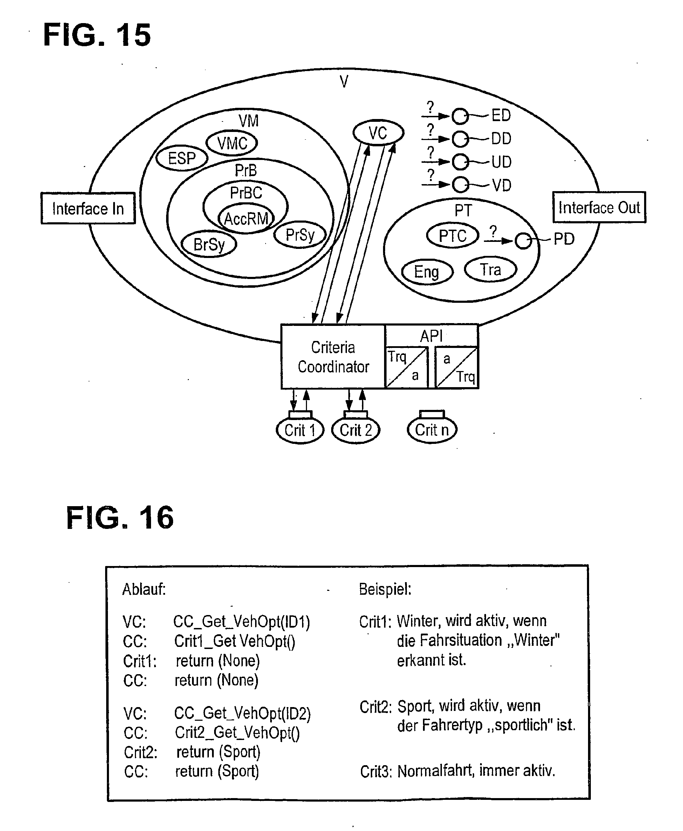

Die Auswahl des aktuellen Optimierungskriteriums wird entsprechend Fig. 15 vom Fahrzeugkoordinator (Vehicle Coordinator, VC) gesteuert. Dieser fragt Vorschläge von Plug-Ins (Crit x) über eine spezielle Schnittstelle, den Kriterienkoordinator (Criteria Coordinator, CC) ab und priorisiert diese lediglich. Wie die Plug-Ins die Aufgabe erledigen, einen Vorschlag zu ermitteln, und um welche Art von Plug-Ins es sich jeweils handelt, ist dem Fahrzeugkoordinator dabei nicht bekannt.

In Fig. 16 ist ein beispielhafter Priorisierungsablauf entsprechend Fig. 15 zur Auswahl des Optimierungskriteriums durch den Fahrzeugkoordinator dargestellt.

Der Ablauf, der auf der linken Seite von Fig. 16 exemplarisch gezeigt ist, geht von Plug-Ins aus, wie sie als Beispiel auf der rechten Seite dargestellt sind.

In diesem Beispiel gibt es in der Reihenfolge ihrer "Wichtigkeit" die drei Plug-Ins "Winter", "Sport" und "Normalfahrt". Diese haben bis auf Normalfahrt die Eigenschaft, nur dann einen Vorschlag für das Optimierungskriterium zu machen (sprich, sie sind nur dann "aktiv"), wenn eine bestimmte Situation vorliegt, wenn diese nicht vorliegt, machen sie keinen Vorschlag (sind also "inaktiv"). Normalfahrt ist insofern eine Ausnahme, da es ohne Vorliegen einer bestimmten Bedingung immer aktiv ist.

Der Ablauf wird folgendermaßen beschrieben: Vor dem Doppelpunkt ganz links steht das Objekt, das eine Tätigkeit auslöst und ein anderes Objekt aufruft. Nach dem Doppelpunkt rechts steht die Methode des aufgerufenen Objekts.

Der Fahrzeugkoordinator ruft zunächst den Kriterienkoordinator auf, einen Vorschlag für eine Fahrzeugoptimierung vom Plug-In mit der ID1 abzufragen. Der Kriterienkoordinator kennt das mit der ID1 benannte Plug-In und holt sich von diesem den aktuellen Optimierungsvorschlag. Da die Fahrsituation Winter aber im Beispiel nicht aktiv ist, gibt es "None", also keinen Vorschlag zurück.

Der Aufruf des nächsten Plug-Ins erfolgt auf die gleiche Art und Weise, dieses gibt jedoch den Optimierungsvorschlag "Sport" zurück, da der Fahrertyp "sportlich" ist.

Da nun ein Vorschlag für ein Optimierungskriterium gefunden ist, brauchen nachfolgende Plug-Ins mit einer niedrigeren Priorität nicht mehr nach einem Vorschlag befragt werden.

Das vorgeschlagene Priorisierungsverfahren an dieser Stelle ist möglichst einfach, es wird eine feste Rangfolge festgelegt und das ranghöchste aktive Kriterium, das nicht "None" zurückliefert, gewinnt. Ein Vorteil dieser Priorisierung liegt darin, dass nicht immer alle Kriterien befragt werden müssen, da in dem Moment abgebrochen werden kann, wenn ein aktives Kriterium gefunden wurde.

Als Schnittstelle zwischen dem Fahrzeugkoordinator und den Plug-In wird (für alle Plug-Ins einheitlich) eine feste Menge von Zuständen vereinbart. Die gewünschte Bedeutung wie z. B. "Sport" oder "Verschleiß" muss auf beiden Seiten bekannt sein, da der Fahrzeugkoordinator dementsprechende Maßnahmen einleiten können soll (Aufruf Crit_Get_VehOpt()).

Die Fahrerwunschinterpretation als 3. Schritt gemäß Fig. 14 hat die Aufgabe, die Vorgaben des Fahrers zu interpretieren und eine Vorgabe für die Längsbewegung des Fahrzeugs daraus abzuleiten. Das umfaßt neben der reinen Fahrpedalinterpretation beispielsweise auch die Vorgaben eines Fahrgeschwindigkeitsreglers oder eines ACC, die den Wunsch des Fahrers nach automatischer Fahrt mit konstanter Geschwindigkeit umsetzen. Als Schnittstelle zum Antriebsstrang bzw. zur Bremse sind Getriebeausgangsmoment und Fahrzeugverzögerung vorgesehen

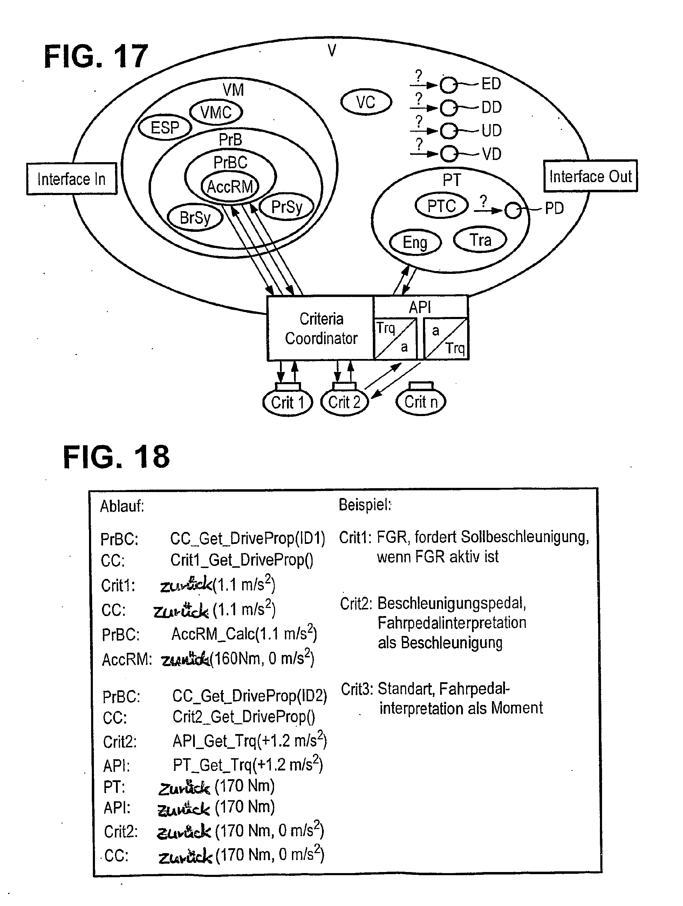

Den Ablauf der Fahrerwunschinterpretation entsprechend Fig. 17 steuert der Vortriebs- und Bremskoordinator (Propulsion and Brakes Coordinator, PrBC). Dieser ermittelt in Zusammenarbeit mit einer unbestimmten Anzahl von Plug-Ins nach einem speziellen Priorisierungsverfahren die Vorgaben für Bremse und Antriebsstrang. Der Fahrzeugbewegungskoordinator (Vehicle Motion Coordinator, VMC) koordiniert diese langsamen Vorgaben noch mit den schnellen Eingriffen der Traktions- und Fahrstabilitätssysteme (ESP) (die Begriffe langsam und schnell sollen hier andeuten, daß die Reaktionszeiten eines normalen Fahrers im Vergleich zu den Reaktionszeiten eines elektronischen Systems "lang" sind) und gibt die so gewonnenen Forderungen an den Triebstrang (Propulsion System, PrSy) bzw. das Bremssystem (Brake System, BrSy) weiter, wobei die weitere Auswertung und Durchführung der Vorgaben an die Bremse nicht Teil dieser Darstellung sind.

Zusätzlich bietet der Kriterienkoordinator noch eine spezielle Schnittstelle (Application Programming Interface, API) zur Umrechnung einer Fahrzeugbeschleunigung in das dafür zum aktuellen Zeitpunkt benötigte Getriebeausgangsmoment und umgekehrt an, wobei der Kriterienkoordinator diese Aufgabe nicht selber erfüllt, sondern z. B. an den Triebstrang weiterleitet, da dieser die relativ aufwendige Umrechnung zur Bewältigung seiner Aufgaben eh beinhaltet. Dadurch ergeben sich Vorteile bei der Umsetzung der Plug-Ins:
- Die Plug-Ins werden einfacher, übersichtlicher und kleiner,
- die Plug-Ins werden unabhängig von fahrzeugspezifischen Daten und
- der Gesamtsoftwareumfang wird geringer.

In Fig. 18 ist ein beispielhafter Priorisierungsablauf analog Fig. 16 entsprechend Fig. 17 zur Fahrerwunschinterpretation dargestellt.

Der Beispielablauf zur Fahrerwunschinterpretation in Fig. 18 orientiert sich an den Plug-Ins Fahrgeschwindigkeitsregler (FGR), Beschleunigungspedal und "Standard"-Fahrpedal mit den folgenden Funktionsweisen:

Der Fahrgeschwindigkeitsregler versucht eine stationäre Geschwindigkeit durch die Anforderung einer Sollbeschleunigung einzuregeln, wenn der Fahrer diesen aktiviert hat. Das Beschleunigungspedal interpretiert die Fahrpedalstellung des Fahrers als Beschleunigungswunsch. Das Standard-Fahrpedal interpretiert die Fahrpedalstellung des Fahrers geschwindigkeitsabhängig als Getriebeausgangsmoment.

Der Vortriebs- und Bremskoordinator fragt über den Kriterienkoordinator zunächst das Plug-In mit der ID1 (Fahrgeschwindigkeitsregler) nach dessen Vortriebswunsch. Dies liefert einen Wunsch nach einer Beschleunigung von 1,1 m/s² zurück. Die Forderung, die der PrBC nach außen weitergeben kann, ist jedoch Getriebeausgangsmoment und Bremsverzögerung. Daher beauftragt er den Beschleunigungsmanager (Acceleration Request Manager, AccRM) damit, eine Standardaufteilung der geforderten Beschleunigung auf Vortrieb und Bremse durchzuführen. Diese ergibt ein Getriebeausgangsmoment von 160 Nm und keine Verzögerung.

Anschließend wird das Plug-In mit der ID2 aufgerufen. Das Beschleunigungspedal ermittelt eine gewünschte Beschleunigung von 1,2 m/s² durch die Fahrervorgabe am Fahrpedal. Die Aufteilung auf Vortrieb und Bremse erledigt dieses Plug-In jedoch selber über das API des Kriterienkoordinators und gibt einen Vortriebswunsch von 170 Nm und keine Verzögerung an den Koordinator zurück.

Das dritte Plug-In Standard-Fahrpedal wird nicht aufgerufen. Im vorherigen Schritt (Festlegen der Optimierungskriterien) wurde als aktuelles Optimierungskriterium "Sport" festgestellt. Bei diesem Optimierungskriterium wird in der Fahrerwunschinterpretation anstelle des Standard-Fahrpedals in diesem Beispiel das Beschleunigungspedal aufgerufen, das Standardpedal wird nicht benötigt.

Abschließend wählt der Koordinator das Plug-In mit der ID2 als Gewinner aus, da dessen Forderung den höchsten Betrag hatte. Außerdem teilt er allen Plug-Ins mit, dass das Plug-In mit der ID2 gewonnen hat mit einer Forderung von 170 Nm Getriebeausgangsmoment und keiner Verzögerung. Daraus kann der Fahrgeschwindigkeitsregler erkennen, dass sein Vorschlag durch ein anderes Plug-In überstimmt wurde und dementsprechend reagieren (z. B. Festhalten des I-Anteils oder Deaktivierung).

Die Priorisierung der Fahrerwunschinterpretation ist eine Erweiterung des linearen Verfahrens:

Aus der Menge aller Plug-Ins, die einen Vorschlag zur Fahrerwunschinterpretation machen können, werden nur die ausgewählt, deren Vorschlag zum aktuellen Optierungskriterium passt. So kann z. B. je nach Optimierung ein "normales" Fahrpedal gegen ein "sportliches" Fahrpedal ausgetauscht werden.

Anschließend erfolgt eine lineare Priorisierung all derjenigen Plug-Ins, für die eine feste Rangfolge festgelegt werden kann. Dies kann beispielsweise für ein Bremspedal geschehen, da bei der Betätigung der Bremse FGR und Fahrpedal inaktiv sein müssen (allerdings nur bedingt, s. Bretttest). Wenn in dieser Phase ein Plug-In aktiv wird, bricht das Verfahren entsprechend der linearen Priorisierung ab.

Wird jedoch kein Plug-In aktiv, so werden alle weiteren Plug-Ins, die sich nicht in eine feste Rangfolge ordnen lassen, aufgerufen. Die Priorisierung erfolgt dann aus der Menge aller Vorschläge durch eine Maximalauswahl.

Grundsätzlich werden damit nur die Kriterien herangezogen, die zum aktuellen Optimierungskriterium "passen"; die eigentliche Priorisierung erfolgt in einem zweistufigen Verfahren:

In einer ersten (applizierbaren) Tabelle wird für die Kriterien eine Reihenfolge festgelegt, nach der sie befragt werden. Sobald ein Wunsch erkannt wird, bricht das Verfahren ab. Für einige Kriterien reicht diese einfache Priorisierung aus (z. B. bei einer Anforderung des Bremspedals, FGR und Fahrpedal brauchen dann nicht mehr befragt werden).

Falls im ersten Schritt kein Wunsch ermittelt werden kann, wird in einem zweiten Schritt eine Maximalauswahl des Vortriebsmomentenwunsches aller in einer zweiten (ebenfalls applizierbaren) Tabelle verzeichneten Anforderer durchgeführt; sofern es mindestens einen negativen Momentenwunsch gibt, wird der kleinste negative Wunsch ausgewählt, ansonsten der größte positive Momentenwunsch.

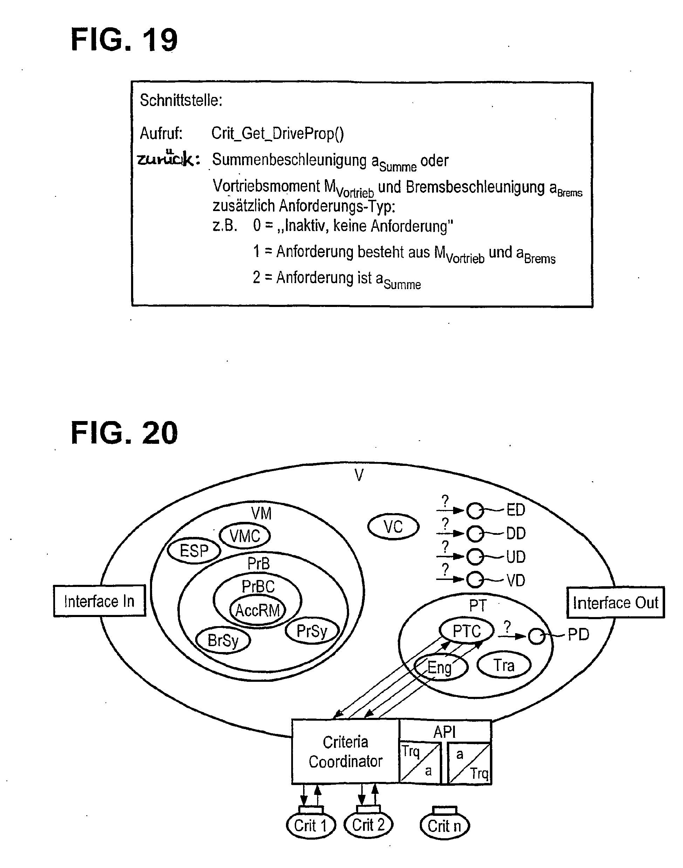

In Fig. 19 ist eine beispielhafte Anforderung eines Plug-Ins dargestellt.

Als Schnittstelle stehen den Plug-Ins im Gegensatz zum Vortriebs- und Bremskoordinator zwei Alternativen zur Verfügung. Sie können entweder Getriebeausgangsmoment M_{Vortrieb} und Bremsverzögerung a_{Brems} oder eine Summenbeschleunigung a_{Summe} fordern. Wird von einem Plug-In eine Summenbeschleunigung angefordert, kann der Koordinator selber entscheiden, wie er diese auf Vortrieb und Bremse aufteilen will (mittels des Beschleunigungskoordinators).

Um zum einen das Erkennen eines nicht vorhandenen Vortriebswunsches (Plug-In ist inaktiv) zu erleichtern (0 Nm ist ein definitiver Vortriebswunsch und eignet sich daher nicht zur Kennzeichnung von "kein Wunsch") und zum anderen die verwendete Schnittstellenalternative anzuzeigen, wird vom Plug-In zusätzlich der Anforderungstyp 0,1 oder 2 vorgegeben.

Die Fahrerwunschinterpretation liefert als Ergebnis ein Getriebeausgangsmoment, das vom Antriebsstrang zur Verfügung gestellt werden soll (hinzu kommt noch die benötigte Nebenaggregateleistung). Hierfür muss nun ein optimaler Betriebspunkt als 4. Schritt gemäß Fig. 14 bestimmt werden, wobei sich "optimal" am ausgewählten Optimierungskriterium orientiert.

Ein Betriebspunkt ergibt sich in einem konventionellen Antriebsstrang aus dem Motormomentmoment und der Übersetzung des Getriebes, da sich die Motordrehzahl bei gegebener Fahrzeuggeschwindigkeit direkt daraus berechnen lässt. Für zukünftige Konzepte ergeben sich durch den Einbau weiterer Aggregate evtl. noch weitere Freiheitsgrade (z. B. E-Maschine im 4-Quadranten-Betrieb).

Die Bestimmung des optimalen Betriebspunktes gemäß Fig. 20 wird vom Antriebsstrangkoordinator (Powertrain Coordinator, PTC) verwaltet. Dieser kommuniziert in üblicher Weise mit den Plug-Ins über den Kriterienkoordinator.

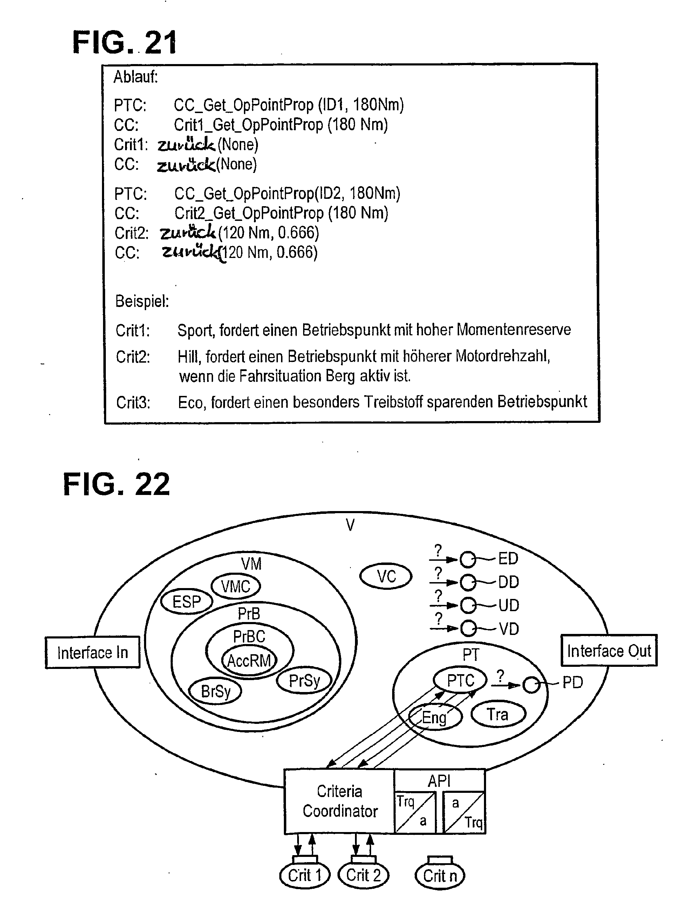

In Fig. 21 ist ein beispielhafter Priorisierungsablauf analog Fig. 16 entsprechend Fig. 20 zur Bestimmung des optimalen Betriebspunktes dargestellt.

Der Ablauf zur Bestimmung des optimalen Betriebspunktes erfolgt wieder nach dem Schema lineare Priorisierung. Als Beispiel sind drei Plug-Ins mit den Aufgaben Sport, Berg und Ökonomisch dargestellt.

Der Antriebsstrangkoordinator ruft den Kriterienkoordinator auf, einen Vorschlag für einen optimalen Betriebspunkt bei einem Vortriebsmoment von 180 Nm vom Plug-In mit der ID 1 abzufragen.

Der Kriterienkoordinator keimt das mit der ID 1 benannte Plug-In und holt sich von diesem dem optimalen Betriebspunkt. Da die Fahrsituation Sport nicht aktiv ist, gibt es "None", also keinen Vorschlag, zurück.

Der Aufruf des nächsten Plug-Ins mit der ID2 erfolgt auf die gleiche Weise, dieses gibt einen optimalen Betriebspunkt mit einem Motorausgangsmoment von 170 Nm und einer Übersetzung von 0,666 an.

Zur Priorisierung werden nur die Kriterien herangezogen, die zum aktuellen Optimierungskriterium "passen" (eine applizierbare Tabelle mit allen "passenden" Kriterien für jedes Optimierungskriterium).

Für die Kriterien wird eine Reihenfolge festgelegt, nach der sie befragt werden (s. Fig. 21). Das Kriterium mit der höchsten Priorität wird zuerst befragt. Wenn es nicht aktiv ist, wird das nächste befragt usw., bis das erste aktive Kriterium gefunden ist, danach bricht das Verfahren ab.

Das erste aktive Kriterium wird verwendet. An der Schnittstelle erfolgt somit Folgendes:
Aufruf: Crit_Get_OpPointProp (Getriebeausgangsmoment)
Return: Motorausgangsmoment, Übersetzung.

Die Plug-Ins werden aufgerufen, wobei ihnen das Sollgetriebeausgangsmoment als Parameter mit übergeben wird, damit die Plug-Ins wissen, für welche Momentenforderung ein ihrer Aufgabe nach optimaler Vorschlag abgefragt wird.

Die letzte Aufgabe als 5. Schritt gemäß Fig. 14 der koordinierten Antriebsstrangsteuerung ist das Anfahren des optimalen Betriebspunktes. Der aktuelle und der neue optimale Betriebspunkt können unter Umständen relativ weit "auseinander" liegen (z. B. wenn der Fahrer plötzlich ins Fahrpedal tritt). Um Fahrbarkeit, Komfort, Sicherheit und Aggregateschutz zu gewährleisten ist es daher häufig sinnvoll, keinen abrupten Übergang (so schnell wie möglich) zuzulassen, sondern den neuen Betriebspunkt gedämpft anzufahren.

Das Anfahren des optimalen Betriebspunktes gemäß Fig. 22 wird gemeinsam mit dem Bestimmen des optimalen Betriebspunktes vom Antriebsstrangkoordinator (Powertrain Coordinator, PTC) verwaltet. Dieser kommuniziert in üblicher Weise mit den Plug-Ins über den Kriterienkoordinator.

Das abschließend ermittelte Ergebnis wird vom Antriebsstrangkoordinator an die Komponenten Motor und Getriebe zur Ausführung weitergegeben.

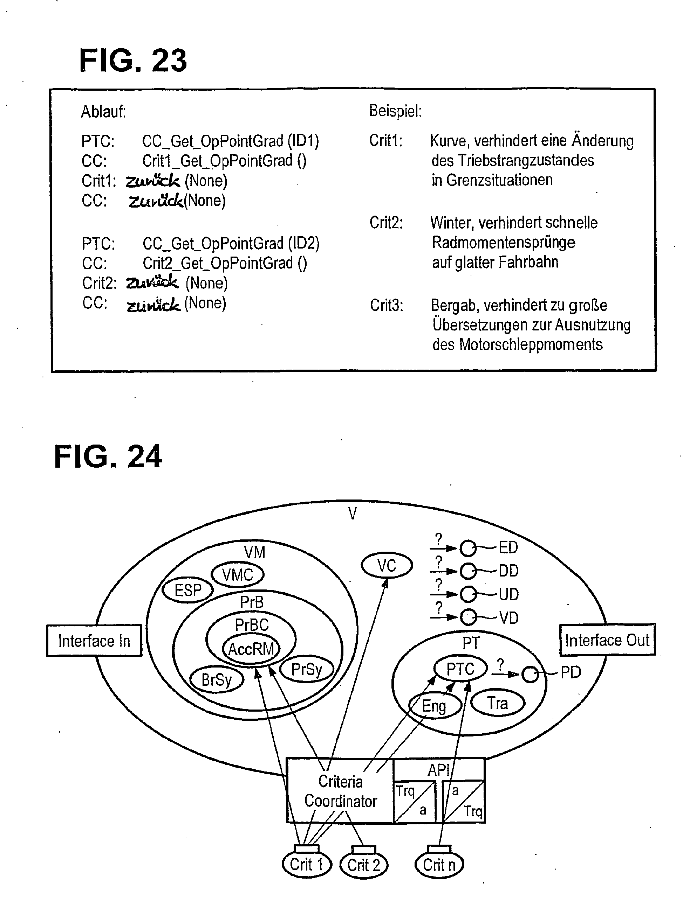

In Fig. 23 ist ein beispielhafter Priorisierungsablauf analog Fig. 16 entsprechend Fig. 22 zum Anfahren des optimalen Betriebspunktes dargestellt.

Der Ablauf zum Anfahren des optimalen Betriebspunktes basiert wieder auf dem linearen Priorisierungsverfahren. Als Beispiel sind die Plug-Ins Kurve, Winter und Berg ab dargestellt.

Der Antriebsstrangkoordinator ruft den Kriterienkoordinator auf, einen Vorschlag für eine Gradientenbegrenzung von Plug-Ins mit der ID1 abzufragen.

Der Kriterienkoordinator kennt das mit der ID1 benannte Plug-In und holt sich von diesem eine Gradientenbegrenzung. Da Crit1 nicht aktiv ist (Kurve, verhindert eine Änderung des Triebstrangzustandes in fahrdynamischen Grenzsituationen), gibt es "None", also keinen Vorschlag zurück.

Der Aufruf des nächsten Plug-Ins mit der ID2 erfolgt auf die gleiche Weise, dieses gibt "None", also keinen Vorschlag, da auch Crit2 (Winter) nicht aktiv ist.

Zur Priorisierung werden nur die Kriterien herangezogen, die zum aktuellen Betriebspunkt der Betriebspunktermittlung "passen" (eine applizierbare Tabelle bzw. Liste mit allen "passenden" Kriterien für jedes Betriebspunktkriterium).

Für die Kriterien wird eine Reihenfolge festgelegt, nach der sie befragt werden (s. Fig. 23). Das Kriterium mit der höchsten Priorität wird zuerst befragt. Wenn es nicht aktiv ist, wird das nächste befragt usw., bis das erste aktive Kriterium gefunden ist, danach bricht das Verfahren ab.

(Eine weitere Möglichkeit ergibt sich, indem eine Max- oder Min- Auswahl aus allen Anforderungen durchgeführt wird.)

An der Schnittstelle erfolgt Folgendes:
Aufruf: Crit_Get_OpPointGrad()
Return: Gradientenbegrenzung, z. B. in Form von Filterparametem, Min- und Max-Werten für Motormomenten- und Übersetzungsverstellung.

Das Priorisierungsverfahren zum Anfahren des optimalen Betriebspunktes unterscheidet sich vom linearen Priorisierungsverfahren darin, dass es nicht ein Plug-In geben muss, das auch tatsächlich einen Vorschlag macht, alle Plug-Ins können "None" zurückgeben, was dann als "so schnell wie möglich" Anfahren des neuen Betriebspunktes interpretiert wird.

Die Schnittstelle für die Vorgaben der Plug-Ins kann recht vielfältig ausfallen. Denkbar sind Gradientenbegrenzungen, Filterparameter oder absolute Grenzen für Motormoment und Übersetzung.

In Fig. 24 ist allgemein eine schematische Strukturierung gemäß Fig. 13 bei der Benutzung einzelner Plug-Ins von verschiedenen Schnittstellen dargestellt.

Entsprechend den zugeteilten Aufgaben können einzelne Plug-Ins eine, mehrere oder alle Schnittstellen benutzen. Die nachfolgenden beispielhaften Plug-Ins Sport, Kriechen und Kurve nutzen somit unterschiedliche Schnittstellen:
- Sport:
   - Anforderung sportliche Fahrzeugoptimierung,
   - Anforderung sportliche Fahrpedalinterpretation durch andere Pedalkennlinie und weniger Lastschlagdämpfung,
   - Anforderung sportliche Übersetzungswahl mit hoher Momentenreserve durch höhere Drehzahl,
   - Anforderung sportliche Übersetzungsverstellung (schnell anstatt komfortabel für möglichst hohe Beschleunigung);
- Kriechen:
   - Veränderte Fahrpedalinterpretation mit Bremseingriff, um möglichst einfaches Einparken zu ermöglichen;
- Kurve:
   - Verhinderung von Übersetzungsverstellungen bei Kurvenfahrt im Grenzbereich.

Abschließend werden nochmals zusammenfassend die Vorteile der gesamten Erfindung aufgeführt:
- Eine Funktion im Sinne einer durch den Fahrer erkennbaren zusammenhängenden Funktionalität hat häufig Anforderungen und Auswirkungen auf verschiedenste Komponenten im Fahrzeug. Beispielsweise kann ein adaptiver Geschwindigkeitsregler beim Einhalten einer durch den Fahrer vorgegebenen Geschwindigkeit sowohl beschleunigen als auch verzögern. Dazu müssen die Komponenten Motor, Getriebe und Bremse entsprechend angesteuert werden. Dies wird im beschriebenen System möglich gemacht, ohne dass die Funktionalität auf verschiedene Komponenten aufgeteilt werden muss. Die Funktionalität bleibt als Einheit zusammen und kann dem System hinzugefügt oder entnommen werden, ohne dass dafür die Software oder Hardware des Systems geändert werden muss.
- In dieses optimierte System können dann Anforderungen verschiedenster Systeme in einheitlicher Art auf Basis von Systemführungsgrößen (im Wesentlichen dem Getriebeausgangsmoment) zentral eingebracht werden.
- In dieses optimierte System können verschiedenste Verfahren zur Ermittlung von geeigneten Betriebspunkten des Antriebsstranges eingebracht werden.
- In diesem optimierten System können die Anforderungen und Verfahren entsprechend der aktuellen Fahrsituation durch ein abstraktes Priorisierungsverfahren situationsgerecht priorisiert werden, so dass die "richtige" Anforderung berücksichtigt und das "optimale" Verfahren zur Betriebspunktauswahl verwendet wird.
- Dieses optimierte System rechnet die Anforderungen entsprechend der Triebstrangtopologie des betreffenden Fahrzeugs um und macht Vorgaben an die Triebstrangkomponenten, wobei die Schnittstellen zu den Komponenten so abstrakt wie möglich auf physikalischer Basis festgelegt werden, um Abhängigkeiten beispielsweise von verschiedenen Motortypen (Diesel und Benzin) weitestgehend auszuschalten.
- Dieses System bietet die Möglichkeit, die Ennittlung von Anforderungen und Verfahren zur Berechnung von optimalen Betriebspunkten in Plug-Ins zusammenzufassen, um so separierbare Systeme im Sinne von veräußerbaren Produkten zu schaffen.
- Eine Funktion im Sinne einer durch den Fahrer erkennbaren zusammenhängenden Funktionalität hat häufig Anforderungen und Auswirkungen auf verschiedenste Komponenten im Fahrzeug. Beispielsweise kann ein adaptiver Geschwindigkeitsregler beim Einhalten einer durch den Fahrer vorgegebenen Geschwindigkeit sowohl beschleunigen als auch verzögern. Dazu müssen die Komponenten Motor, Getriebe und Bremse entsprechend angesteuert werden. Dies wird im beschriebenen System möglich gemacht, ohne dass die Funktionalität auf verschiedene Komponenten aufgeteilt werden muss. Die Funktionalität bleibt als Einheit zusammen und kann dem System hinzugefügt oder entnommen werden, ohne dass dafür das Programm des Systems geändert werden muss.
- Die Priorisierungsverfahren zur Auswertung der Anforderungen verschiedener Plug-Ins können auf Grund deren Einheitlichkeit (alle Plug-Ins fordern zur Beschleunigung des Fahrzeugs ein Getriebeausgangsmoment (Führungsgröße des Systems) so ausgelegt werden, dass zur Priorisierung nicht bekannt sein muss, welches System hinter der Anforderung steht (es spielt aus Sicht des Priorisierungsverfahrens keine Rolle, welche Funktionalität ein Plug-In erfüllt, sondern nur, welche Priorität es hat). Durch diese Anonymisierung der Anforderer ist es möglich, die Anzahl der zu berücksichtigenden Plug-Ins frei zu wählen, ohne dafür das Programm ändern zu müssen. Dadurch vereinfacht sich die Konfiguration des Systems zur Anpassung an eine bestimmte Fahrzeug- und Funktionsvariante erheblich und es können auch nachträglich noch Funktionen hinzugefügt werden, die zunächst nicht mit eingeplant waren.
- Zu den Komponenten im Triebstrang entstehen einheitliche, abstrakte Schnittstellen, die weitestgehend von Varianten der Komponenten unabhängig sind. Dadurch können bei Einhaltung der Schnittstellen sehr einfach Komponenten unterschiedlicher Hersteller eingesetzt werden, wodurch sich der Fahrzeughersteller nicht von proprietären Lösungen einzelner Zulieferer abhängig macht.
- Die Programme der Plug-Ins können weitestgehend ohne Kenntnisse von der Art eingesetzter Komponenten definiert werden und dadurch in vielen Fahrzeugkonfigurationen wieder verwendet werden. Dies ist bei der hohen Zahl an Fahrzeugvarianten ein deutlicher Vorteil. Ein typisches Beispiel ist der Fahrgeschwindigkeitsregler, der sich heute intern stark unterscheidet, je nachdem ob ein Diesel- oder ein Benzinmotor das Fahrzeug antreibt. Das beschriebene System wirkt wie eine Zwischenschicht, die die Funktionalitäten, die in Plug-Ins abgebildet werden, von den Komponenten entkoppelt. Ein weiterer positiver Effekt der Entkopplung ist die Reduktion des Applikationsaufwandes, der sonst häufig durch Änderungen in anderen Funktionen oder Komponenten erzeugt wird.

## Patentansprüche

1. Computersystem mit wenigstens einem Prozessor und wenigstens einem Speicher zur koordinierten Antriebsstrangsteuerung für ein Kraftfahrzeug, mit einer Softwarearchitektur mit folgenden Elementen bzw. Komponenten:
- ein Operation System and Specific Services mit Betriebssystem und spezifischen Diensten als Basis für alle anderen Elemente und Anwendungen,
- eine Basic Functionality zur Umsetzung universeller Anforderungen,
- einen Layer zur Koordinierung von Aufgaben für Basisfunktionalitäten der Basic Functionality und zur Einbindung von Plug-Ins bzw. Anforderern,
- wenigstens ein Plug-In bzw. Anforderer zur Umsetzung von konkreten Aufgaben bzw. Funktionen, die über die Basisfunktionalität hinausgehen und vom Layer koordiniert werden, wobei die Plug-Ins bzw. Anforderer modulartig austauschbar sind, wobei das Computersystem dazu ausgebildet ist, ein Priorisierungsverfahren von Informationsgebern, z. B. Plug-Ins, zur koordinierten Antriebsstrangsteuerung für ein Kraftfahrzeug mit den nachfolgenden Schritten durchzuführen:
- in einer Liste mit Anforderern bzw. Plug-Ins alle Anforderer in beliebiger Reihenfolge beispielsweise sequentiell abarbeiten,
- aus den Anforderungswünschen der Anforderer den Anforderungswunsch mit dem maximalen, bzw. minimalen Anforderungswunsch oder der durchschnittliche Anforderungswunsch der Anforderer ermitteln, wobei einem Anforderungswunsch ein Wert entspricht,
**dadurch gekennzeichnet, dass** das Computersystem dazu ausgebildet ist, zur Ermittlung des maximalen minimalen Anforderungswunsches und somit Werts:
- den ersten abgefragten Anforderungswunsch und somit Wert zwischenzuspeichern,
- jeden abgefragten Anforderungswunsch bzw. Wert mit einem zwischengespeicherten Anforderungswunsch bzw. Wert zu vergleichen, ob er größer, bzw. kleiner ist als ein zwischengespeicherter Anforderungswunsch bzw. Wert,
- den abgefragten Anforderungswunsch bzw. Wert zwischenzuspeichern, falls er größer, bzw. kleiner ist als der zwischengespeicherte Anforderungswunsch bzw. Wert und andernfalls keine Speicherung erfolgt,
- nach der Abfrage aller Anforderer den maximalen, bzw. minimalen Anforderungswunsch bzw. Wert zwischenzuspeichern und weiterzuleiten.

2. Computersystem nach Anspruch 1, **dadurch gekennzeichnet, dass** in der Softwarearchitektur offene Schnittstellen auf die von außen zugegriffen werden kann und/oder geschlossene Schnittstellen (Incapsulated Interfaces), die nach außen nicht freigegeben sind, integriert sind.

3. Computersystem nach Anspruch 1 oder 2, **dadurch gekennzeichnet, dass** als Plug-Ins beispielsweise ein ACC, Adaptive Cruise Control-Request, ein Drivers Demand (comfort/sport), Driveability und Shift Strategie (comfort/sport) verwendet werden.

4. Computersystem nach einem der vorhergehenden Ansprüche, **dadurch gekennzeichnet, dass** der Layer die Koordinatoren Vehicle Coordinator, Vehicle Motion Coordinator und Powertrain Coordinator umfasst.

5. Computersystem nach Anspruch 4, **dadurch gekennzeichnet, dass** jeder Koordinator über Schnittstellen mit den Plug-Ins zur Kommunikation verbunden ist.

6. Computersystem nach einem der vorhergehenden Ansprüche, **dadurch gekennzeichnet, dass** der Layer über Schnittstellen zur Kommunikation mit der Basic Functionality verbunden ist, welche Basisfunktionen enthält, die wie Sensoren oder Aktoren agieren.

7. Computersystem nach einem der vorhergehenden Ansprüche, **dadurch gekennzeichnet, dass** durch die modulartige Austauschbarkeit der Plug-Ins das Computersystem flexibel an unterschiedliche Fahrzeug- und Steuergerätekonfigurationen anpassbar ist und Funktionen einfach implementierbar sind, wobei Anforderungen verschiedener Systeme in einheitlicher Art auf Basis von Systemführungsgrößen, z. B. Getriebeausgangsmoment, zentral eingebracht werden.

8. Priorisierungsverfahren von Informationsgebern, z. B. Plug-Ins, zur koordinierten Antriebsstrangsteuerung für ein Kraftfahrzeug, durchgeführt mit einem Computersystem nach einem der Ansprüche 1 bis 7, wobei:
- eine Liste mit Anforderern bzw. Plug-Ins nach dem Grad der Priorität aufsteigend oder abfallend sortiert wird,
- die sortierte Liste sequentiell beginnend mit dem Anforderer bzw. Plug-In mit der höchsten Priorität abgearbeitet wird,
- das Abarbeiten der Liste abgebrochen wird, sobald ein Anforderer bzw. Plug-In einen Anforderungswunsch enthält, um diesen Anforderungswunsch auszuwählen.

9. Priorisierungsverfahren nach Anspruch 8, **dadurch gekennzeichnet, dass** der ausgewählte Anforderungswunsch gespeichert und weitergeleitet wird.

10. Priorisierungsverfahren nach Anspruch 8 oder 9, **dadurch gekennzeichnet, dass** verschiedene Listen zum Anpassen auf globale Optimierungskriterien, z. B. Ökoabstimmung, Sportabstimmung oder Wintererkennung, abgearbeitet werden.

11. Priorisierungsverfahren nach einem der Ansprüche 8 bis 10, **dadurch gekennzeichnet, dass** jeder Anforderer bzw. jedes Plug-In durch eine Identität (ID), vorzugsweise als Zahl, und eine Position in den verschiedenen Listen für das Abarbeiten eindeutig **gekennzeichnet** ist.

12. Priorisierungsverfahren von Informationsgebern, z. B. Plug-Ins, zur koordinierten Antriebsstrangsteuerung für ein Kraftfahrzeug, durchgeführt mit einem Computersystem nach einem der Ansprüche 1 bis 7, mit den nachfolgenden Schritten:
- in einer Liste mit Anforderern bzw. Plug-Ins werden alle Anforderer in beliebiger Reihenfolge abgearbeitet, beispielsweise sequentiell,
- aus den Anforderungswünschen der Anforderer wird der Anforderungswunsch mit dem maximalen, bzw. minimalen Anforderungswunsch oder der durchschnittliche Anforderungswunsch der Anforderer ermittelt.

13. Priorisierungsverfahren nach Anspruch 12, **dadurch gekennzeichnet, dass** zur Ermittlung des maximalen, bzw. minimalen Anforderungswunsches:
- der erste abgefragte Anforderungswunsch zwischengespeichert wird,
- jeder abgefragte Anforderungswunsch mit einem zwischengespeicherten Anforderungswunsch verglichen wird, ob er größer, bzw. kleiner ist als ein zwischengespeicherter Anforderungswunsch,
- der abgefragte Anforderungswunsch zwischengespeichert wird, falls er größer, bzw. kleiner ist als der zwischengespeicherte Anforderungswunsch und andernfalls keine Speicherung erfolgt,
- nach der Abfrage aller Anforderer der maximale, bzw. minimale Anforderungswunsch zwischengespeichert ist und weitergeleitet wird.

14. Priorisierungsverfahren nach Anspruch 12 oder 13, **dadurch gekennzeichnet, dass** bei bestimmten Anforderern, z. B. Anforderer, die Motor und Bremse ansteuern, mit einem bestimmten Anforderungswunsch, z. B. einem Bremseingriff, der minimale, bzw. maximale Anforderungswunsch, z. B. der minimale Vortriebswunsch, ausgewählt wird und andernfalls der maximale, bzw. minimale Anforderungswunsch.

15. Priorisierungsverfahren nach einem der Ansprüche 12 bis 14, **dadurch gekennzeichnet, dass** einzelne Anforderer bewirken, dass bestimmte andere Anforderer bei der Ermittlung des maximale, bzw. minimalen Anforderungswunsches nicht berücksichtigt werden, z. B. ein Anforderer-Fahrpedal bewirkt, dass alle Anforderer, die eine Bremsung/Verzögerung bewirken, nicht berücksichtigt werden.

16. Priorisierungsverfahren nach einem der Ansprüche 12 bis 15, **dadurch gekennzeichnet, dass** verschiedene Listen zum Anpassen auf globale Optimierungskriterien, z. B. Ökoabstimmung, Sportabstimmung oder Wintererkennung, abgearbeitet werden.

17. Priorisierungsverfahren nach einem der Ansprüche 12 bis 16, **dadurch gekennzeichnet, dass** jeder Anforderer bzw. Plug-In durch eine Identität (ID), vorzugsweise als Zahl, für das Abarbeiten eindeutig **gekennzeichnet** ist.

18. Priorisierungsverfahren von Informationsgebern, z. B. Plug-Ins, nach einem der Ansprüche 8 bis 17, **dadurch gekennzeichnet, dass** das erste Priorisierungsverfahren nach einem der Ansprüche 8 bis 11 mit dem zweiten Priorisierungsverfahren nach einem der Ansprüche 12 bis 17 kombiniert wird, z. B. indem das zweite Priorisierungsverfahren erst angewendet wird, falls das erste Priorisierungsverfahren keinen Anforderungswunsch liefert.

19. Verfahren zur Steuerung zur koordinierten Antriebsstrangsteuerung eines Fahrzeuges, durchgeführt mit einem Computersystem nach einem der Ansprüche 1 bis 7 mit den nachfolgenden Schritten bzw. Phasen:
- Charakterisierung der Umwelteinflüsse,
- Festlegen eines globalen Optimierungskriteriums, z.B. sportlich, ökonomisch oder verschleißschonend,
- Fahrerwunschinterpretation,
- Bestimmung des optimalen Betriebspunktes und
- Anfahren des optimalen Betriebspunktes.

20. Verfahren nach Anspruch 19, **dadurch gekennzeichnet, dass** zur Charakterisierung des Umwelteinflusses aktuelle Umweltdaten aufbereitete und ggf. typisiert werden, z. B. Fahrzeuggrößen wie Geschwindigkeit, Querbeschleunigung, Triebstrangzustand wie Kraftschluss und Schub/Zug Fahrtyperkennung wie sportlich oder ökonomisch durch Ableiten aus dem Fahrverhalten, Fahrsituationserkennung wie Berg, Kurve, Winter, Stadt, Autobahn.

21. Verfahren nach Anspruch 19 oder 20, **dadurch gekennzeichnet, dass** bei der Fahrerwunschinterpretation eine Vorgabe für eine Längsbewegung eines Fahrzeuges, z. B. der Fahrpedalinterpretation nach Beschleunigung/Verzögerung und/oder den Vorgaben eines Fahrgeschwindigkeitsreglers oder ACCs, abgeleitet wird, wobei eine Systemführungsgröße Getriebeausgangsmoment in eine Größe Getriebeausgangsmoment für den Antriebsstrang und eine Größe Fahrzeugverzögerung für die Bremse aufgeteilt wird.

22. Verfahren nach einem der Ansprüche 19 bis 21, **dadurch gekennzeichnet, dass** zur Bestimmung eines optimalen Betriebspunktes für ein Getriebeausgangsmoment ein bestimmtes Motormoment und eine bestimmte Getriebeübersetzung ermittelt wird.

23. Verfahren nach einem der Ansprüche 19 bis 22, **dadurch gekennzeichnet, dass** das Anfahren des optimalen Betriebspunktes in einer bestimmten Zeitspanne zur Dämpfung, z. B. für Fahrbarkeit, Komfort, Sicherheit und Aggregateschutz, erfolgt.

24. Verfahren nach einem der Ansprüche 19 bis 23, **dadurch gekennzeichnet, dass** die Aufgaben der Phasen von Koordinatoren in einem Layer nach einem der Ansprüche 1 bis 7 bearbeitet werden und die Inhalte der Phasen von Plug-Ins über Schnittstellen ermittelt werden, wobei die Plug-Ins vorzugsweise über ein Priorisierungsverfahren nach einem der Ansprüche 8 bis 18 ausgewählt werden.

25. Computersystem nach einem der Ansprüche 1 bis 7 Antriebsstrangsteuerung eines Kraftfahrzeuges, zur Durchführung eines Verfahrens nach einem der Ansprüche 19 bis 24, mit einem objektorientierten Softwaresystem mit folgenden objektorientierten Komponenten:
- Fahrzeugbewegung (Vehicle Motion, VM),
- Antriebsstrang (Powertrain, PT),
- Fahrzeugkoordinator (Vehicle Coordinator, VC),
- Infogebern, z. B. Umweltgrößen (Environment Data, ED), Zustandsgrößen (Driving Condition Data, DD), Fahrzeuggrößen (Vehicle Data, VD), und Benutzergrößen (U-ser Data, U D),
wobei diese objektorientierten Komponenten mit Schnittstellen nach innen und außen (Interface In and Out) und einem Kriterienkoordinator (Criteria Coordinator, CC) zur Abfrage von Plug-Ins bzw. Anforderern kommuniziert.

26. Computersystem nach Anspruch 25,
**dadurch gekennzeichnet,**
**dass** die Komponente Fahrzeugbewegung z. B. die Komponenten Traktions- und Fahrstabilitätssysteme (ESP), Fahrbewegungskoordinator (Vehicle Motion Coordinator, VMC) und Vortrieb/Bremsen (Propulsion/Brake, PrB), aufweist.

27. Computersystem nach Anspruch 26, **dadurch gekennzeichnet, dass** die Komponente Vortrieb/Bremse, z. B. die Komponente Treibstrang (Propulsion System, PrSy), Bremssystem (Brakesystem, BrSy) und einen Vortriebs- und Bremskoordinator (Propulsion and Brake Coordinator, PrBC), mit einer Komponente Beschleunigungsaufteiler (Acceleration Request Manager, AccRM) aufweist.

28. Computersystem nach einem der Ansprüche 25 bis 27, **dadurch gekennzeichnet, dass** die Komponente Antriebsstrang, z. B. die Komponenten Antriebsstrangkoordinator (Powertrain Coordinator, PTC), Motor (Engine, Eng), Getriebe (Transmission, Tra) und den Infogeber Triebzustandsgrößen (Powertrain Data, PD) aufweist.

29. Computersystem nach einem der Ansprüche 25 bis 28, **dadurch gekennzeichnet dass**, der Kriterienkoordinator mit einer Anwendungsschnittstelle (Application Programming-Interface, API) kommuniziert.

30. Verfahren nach einem der Ansprüche 19 bis 24 durchgeführt mit einem Computersystem nach einem der Ansprüche 25 bis 29 mit folgenden Schritten:
- zur Charakterisierung der Umwelteinflüsse, die aktuellen Umweltdaten bzw. Zustandsgrößen in Infogebern zugewiesen werden, worauf alle anderen Komponenten zugreifen können, ausgenommen die Triebzustandsgrößen, worauf nur der Antriebstrang zugreifen kann,
- vom Fahrzeugkoordinator das Festlegen eines globalen Optimierungskriteriums gesteuert wird, welcher Vorschläge über den Kriterienkoordinator von ausgewählten Plug-Ins abfragt,
- vom Vortriebs- und Bremskoordinator die Fahrerwunschinterpretation gesteuert wird, welche in Zusammenarbeit mit ausgewählten Plug-Ins über den Kriterienkoordinator die Vorgaben für Bremse und Antriebsstrang ermittelt, wobei vorzugsweise der Fahrbewegungskoordinator diese Vorgaben mit den Traktions- und Fahrstabilitätssystem koordiniert und die Vorgaben an den Triebstrang bzw. das Bremssystem weitergegeben werden, wobei über die Anwendungsschnittstelle z. B. eine Fahrbeschleunigung in ein Getriebeausgangsmoment umgerechnet wird und an den Antriebsstrang weitergegeben wird,
- vom Antriebsstrangkoordinator zum Bestimmen des optimalen Betriebspunktes über den Kriterienkoordinator Plug-Ins ausgewählt werden und der Antriebsstrangkoordinator mit den Plug-Ins über den Kriterienkoordinator kommuniziert.

31. Verfahren nach Anspruch 30, **dadurch gekennzeichnet, dass** die Auswahl der Plug-Ins mit einem Priorisierungsverfahren nach einem der Ansprüche 8 bis 18 ausgeführt wird.

32. Computerprogramm mit Programmcodemitteln, um alle Schritte eines Verfahrens nach einem der Ansprüche 8 bis 24 oder 30 bis 31 durchzuführen, wenn das Computerprogramm auf einem Computer oder einer entsprechenden Recheneinheit durchgeführt wird.

33. Computerprogrammprodukt mit Programmcodemitteln, die auf einem lesbaren Datenträger gespeichert sind, um ein Verfahren nach einem der Ansprüche 8 bis 24 oder 30 bis 31 durchzuführen, wenn das Computerprogramm auf einem Computer oder einer entsprechenden Rechnereinheit ausgeführt wird.

## Claims

1. Computer system comprising at least one processor and at least one memory for coordinated drive train control for a motor vehicle, having a software architecture with the following elements and components:
- an operation system and specific services with the operating system and specific services as the basis for all other elements and applications,
- a basic functionality for implementing universal requests,
- a layer for coordinating tasks for basic functionalities of the basic functionality and for integrating plug-ins and requesters,
- at least one plug-in or requester for implementing specific tasks or functions which go beyond the basic functionality and are coordinated by the layer, it being possible to replace the plug-ins or requesters in a modular manner, with the computer system being designed for the purpose of carrying out a prioritization method for information providers, for example plug-ins, for coordinated drive train control for a motor vehicle, comprising the following steps:
- processing all requesters in any desired order, for example sequentially, to form a list comprising requesters and plug-ins,
- determining the desired request with the maximum or, respectively, minimum desired request or the average desired request of the requesters from the desired requests of the requesters, with a value corresponding to a desired request,
**characterized in that** the computer system is designed to determine the maximum or, respectively, minimum desired request and therefore value:
- to buffer-store the first interrogated desired request and therefore value,
- to compare each interrogated desired request or value with a buffer-stored desired request or value to determine whether it is larger or, respectively, smaller than a buffer-stored desired request or value,
- to buffer-store the interrogated desired request or value if it is larger or, respectively, smaller than the buffer-stored desired request or value, or else no storage takes place,
- to buffer-store and forward the maximum or, respectively, minimum desired request or value after interrogation of all the requesters.

2. Computer system according to Claim 1, **characterized in that** open interfaces which can be accessed from the outside and/or closed interfaces (encapsulated interfaces) which are not open to the outside are integrated in the software architecture.

3. Computer system according to Claim 1 or 2, **characterized in that** the plug-ins used are, for example, an ACC (adaptive cruise control) request, a driver's demand (comfort/sport), driveability and shift strategy (comfort/sport).

4. Computer system according to one of the preceding claims, **characterized in that** the layer comprises the coordinators vehicle coordinator, vehicle motion coordinator and power train coordinator.

5. Computer system according to Claim 4, **characterized in that** each coordinator is connected to the plug-ins via interfaces for communication purposes.

6. Computer system according to one of the preceding claims, **characterized in that** the layer is connected to the basic functionality, which contains basic functions which operate like sensors or actuators, via interfaces for communication purposes.

7. Computer system according to one of the preceding claims, **characterized in that** the computer system can be flexibly adapted to different vehicle and controller configurations and functions can be implemented in a simple manner by virtue of it being possible to replace the plug-ins in a modular manner, with requests of different systems being introduced centrally in a uniform manner on the basis of system control variables, for example transmission output torque.

8. Prioritization method for information providers, for example plug-ins, for coordinated drive train control for a motor vehicle, carried out using a computer system according to one of Claims 1 to 7, with:
- a list comprising requesters and plug-ins being sorted in an ascending or descending manner depending on the level of the priority,
- the sorted list being processed sequentially starting with the requester or plug-in with the highest priority,
- processing of the list being terminated as soon as a requester or plug-in contains a desired request, in order to select this desired request.

9. Prioritization method according to Claim 8, **characterized in that** the selected desired request is stored and forwarded.

10. Prioritization method according to Claim 8 or 9, **characterized in that** different lists are processed for adapting to global optimization criteria, for example economy mode setting, sport mode setting or identification of wintry conditions.

11. Prioritization method according to one of Claims 8 to 10, **characterized in that** each requester or each plug-in is unambiguously identified by an identity (ID), preferably in the form of a number, and a position in the various lists for processing purposes.

12. Prioritization method for information providers, for example plug-ins, for coordinated drive train control for a motor vehicle, carried out using a computer system according to one of Claims 1 to 7, comprising the following steps:
- all requesters are processed in any desired order, for example sequentially, to form a list comprising requesters and plug-ins,
- the desired request with the maximum or, respectively, minimum desired request or the average desired request of the requesters is determined from the desired requests of the requesters.

13. Prioritization method according to Claim 12, **characterized in that**, in order to determine the maximum or, respectively, minimum desired request:
- the first interrogated desired request is buffer-stored,
- each interrogated desired request is compared with a buffer-stored desired request to determine whether it is larger or, respectively, smaller than a buffer-stored desired request,
- the interrogated desired request is buffer-stored if it is larger or, respectively, smaller than the buffer-stored desired request, or else no storage takes place,
- the maximum or, respectively, minimum desired request is buffer-stored and forwarded after interrogation of all the requesters.

14. Prioritization method according to Claim 12 or 13, **characterized in that** the minimum or, respectively, maximum desired request, for example the minimum propulsion request, or else the maximum or, respectively, minimum desired request, is selected in the case of specific requesters, for example requesters which actuate the engine and brake, with a specific desired request, for example a braking intervention.

15. Prioritization method according to one of Claims 12 to 14, **characterized in that** individual requesters have the effect that certain other requesters are not taken into account during the determination of the maximum or, respectively, minimum desired request, for example a requester accelerator pedal has the effect that all requesters which cause braking/deceleration are not taken into account.

16. Prioritization method according to one of Claims 12 to 15, **characterized in that** various lists for adapting to global optimization criteria, for example economy mode setting, sport mode setting or identification of wintry conditions, are processed.

17. Prioritization method according to one of Claims 12 to 16, **characterized in that** each requester or plug-in is unambiguously identified by an identity (ID), preferably in the form of a number, for processing purposes.

18. Prioritization method for information providers, for example plug-ins, according to one of Claims 8 to 17, **characterized in that** the first prioritization method according to one of Claims 8 to 11 is combined with the second prioritization method according to one of Claims 12 to 17, for example by the second prioritization method only being applied if the first prioritization method does not provide a desired request.

19. Control method for coordinated drive train control of a vehicle, carried out using a computer system according to one of Claims 1 to 7, comprising the following steps and phases:
- characterizing the environmental influences,
- defining a global optimization criterion, for example sporty, economical or low-wear,
- interpreting the driver's requests,
- determining the optimum operating point, and
- approaching the optimum operating point.

20. Method according to Claim 19, **characterized in that**, in order to characterize the environmental influences, actual environmental data is prepared and possibly classified, for example vehicle variables such as speed and lateral acceleration, power train state such as traction and push/pull, driving style identification such as sporty or economical by derivation from the driving behaviour, and driving situation identification such as uphill, curve, winter, city, motorway.

21. Method according to Claim 19 or 20, **characterized in that**, during interpretation of the driver's requests, a prespecification for the longitudinal motion of a vehicle is derived, for example the accelerator pedal interpretation following acceleration/deceleration and/or the prespecifications of a driving speed controller or ACC, with a system control variable transmission output torque being divided into a variable transmission output torque for the drive train and a variable vehicle deceleration for the brake.

22. Method according to one of Claims 19 to 21, **characterized in that** a specific engine torque and a specific transmission ratio are determined in order to determine an optimum operating point for a transmission output torque.

23. Method according to one of Claims 19 to 22, **characterized in that** the optimum operating point is approached over a specific period of time for damping purposes, for example for driveability, comfort, safety and power train protection.

24. Method according to one of Claims 19 to 23, **characterized in that** the tasks of the phases are processed by coordinators in a layer according to one of Claims 1 to 7 and the contents of the phases are determined by plug-ins via interfaces, with the plug-ins preferably being selected by means of a prioritization method according to one of Claims 8 to 18.

25. Computer system according to one of Claims 1 to 7 for coordinated drive train control of a motor vehicle, for carrying out a method according to one of Claims 19 to 24, having an object-oriented software system comprising the following object-oriented components:
- vehicle motion (VM),
- drive train (power train, PT),
- vehicle coordinator (VC),
- information providers, for example environmental variables (environment data, ED), state variables (driving condition data, DD), vehicle variables (vehicle data, VD) and user variables (user data, UD), with these object-oriented components communicating with interfaces on the inside and outside (interface in and out) and a criteria coordinator (CC) for interrogating plug-ins and requesters.

26. Computer system according to Claim 25, **characterized in that** the component vehicle motion has, for example, the components traction and driving stability systems (ESP), vehicle motion coordinator (VMC) and propulsion/brakes (PrB).

27. Computer system according to Claim 26, **characterized in that** the component propulsion/brake has, for example, the component power train (propulsion system, PrSy), brake system (BrSy) and a propulsion and brake coordinator (PrBC) having a component acceleration splitter (acceleration request manager, AccRM).

28. Computer system according to one of Claims 25 to 27, **characterized in that** the component drive train has, for example, the components drive train coordinator (power train coordinator, PTC), engine (Eng), transmission (Tra) and the information provider power train state variables (power train data, PD).

29. Computer system according to one of Claims 25 to 28, **characterized in that** the criteria coordinator communicates with an application interface (application programming interface, API).

30. Method according to one of Claims 19 to 24, carried out using a computer system according to one of Claims 25 to 29, comprising the following steps:
- in order to characterize the environmental influences, the actual environmental data or state variables are allocated to information providers and can be accessed by all other components, apart from the power train state variables which only the drive train can access,
- definition of a global optimization criterion is controlled by the vehicle coordinator which interrogates proposals from selected plug-ins via the criteria coordinator,
- the driver's request interpretation is controlled by the propulsion and brake coordinator which, together with selected plug-ins, determines the prespecifications for the brake and drive train via the criteria coordinator, with the vehicle motion coordinator preferably coordinating these prespecifications with the traction and driving stability system and the prespecifications preferably being forwarded to the power train and/or the brake system, with a vehicle acceleration, for example, being converted into a transmission output torque and forwarded to the drive train via the application interface,
- plug-ins are selected by the drive train coordinator via the criteria coordinator for the purpose of determining the optimum operating point and the drive train coordinator communicates with the plug-ins via the criteria coordinator.

31. Method according to Claim 30, **characterized in that** the plug-ins are selected using a prioritization method according to one of Claims 8 to 18.

32. Computer program with program code means for carrying out all the steps of a method according to one of Claims 8 to 24 or 30 and 31 if the computer program is executed on a computer or a corresponding computation unit.

33. Computer program product with program code means, which are stored in a readable data carrier, for carrying out a method according to one of Claims 8 to 24 or 30 and 31 if the computer program is executed on a computer or a corresponding computer unit.

## Revendications

1. Système informatique doté d'au moins un processeur et d'au moins une mémoire pour la commande coordonnée de la ligne d'entraînement d'un véhicule automobile, doté d'une architecture logicielle avec les éléments et/ou composants suivants :
- un « Operation System and Specific Services » avec un système d'exploitation et des services spécifiques servant de base pour tous les autres éléments et applications,
- une « Basic Functionality » pour convertir des demandes universelles,
- un « Layer » pour la coordination des tâches pour des fonctionnalités de base de la Basic Functionality et pour l'intégration des plug-ins et/ou des demandeurs,
au moins un plug-in et/ou un demandeur, pour convertir des tâches et/ou des fonctions concrètes allant au-delà de la fonctionnalité de base et devant être coordonnées par le Layer, les plug-ins et/ou le demandeur pouvant être échangés de manière modulaire, le système informatique étant conçu pour réaliser un procédé d'octroi d'un statut de priorité des informateurs, par exemple des plug-ins, pour la commande coordonnée de la ligne d'entraînement pour un véhicule avec les étapes suivantes :
- traiter tous les demandeurs dans un ordre quelconque, par exemple séquentiel, dans une liste avec des demandeurs et/ou des plug-ins,
- déterminer à partir des souhaits de demande des demandeurs le souhait de demande avec le souhait de demande minimum et/ou maximum ou le souhait moyen de demande des demandeurs, un souhait de demande ayant une valeur correspondante
**caractérisé en ce que**
pour déterminer le souhait de demande minimum et/ou maximum et donc sa valeur, le système informatique est conçu pour :
- transférer en mémoire auxiliaire le premier souhait de demande demandé et donc la valeur,
- comparer chaque souhait de demande et/ou valeur demandé(e) à un souhait de demande transféré en mémoire auxiliaire pour déterminer s'il/elle est supérieur(e) et/ou inférieur(e) à un souhait de demande et/ou à une valeur transféré(e) en mémoire auxiliaire,
- transférer en mémoire auxiliaire le souhait de demande et/ou la valeur demandé(e) s'il/elle est inférieur(e) au souhait de demande et/ou à la valeur transféré(e) en mémoire et s'il n'y a pas le cas échéant de mémorisation,
- transférer en mémoire intermédiaire et communiquer le souhait de demande et/ou la valeur minimum et/ou maximum après la demande de tous les demandeurs.

2. Système informatique selon la revendication 1,
**caractérisé en ce que**
des interfaces ouvertes auxquelles on peut avoir accès de l'extérieur et/ou des interfaces fermées (incapsulated interfaces) qui ne sont pas délivrées vers l'extérieur sont intégrées dans l'architecture logicielle.

3. Système informatique selon la revendication 1 ou 2,
**caractérisé en ce qu'**
on utilise comme plug-ins par exemple un ACC, Adaptive Cruise Control-Request, une Drivers Demand (comfort/sport), une Driveability et Shift Strategie (comfort/sport).

4. Système informatique selon l'une des revendications précédentes,
**caractérisé en ce que**
le Layer comprend les coordinateurs Vehicle Coordinator, Vehicle Motion Coordinator et Powertrain Coordinator.

5. Système informatique selon la revendication 4,
**caractérisé en ce que**
chaque coordinateur est relié aux plug-ins pour la communication via des interfaces.

6. Système informatique selon l'une des revendications précédentes,
**caractérisé en ce que**
le Layer est relié par des interfaces pour la communication, à la Basic Functionality qui comprend des fonctions de base agissant comme des capteurs ou des actionneurs.

7. Système informatique selon l'une des revendications précédentes,
**caractérisé en ce que**
le système informatique peut être adapté de manière souple aux différentes configurations du véhicule et du boîtier électronique par l'interchangeabilité modulaire des plug-ins, et des fonctions peuvent être mises en place simplement, des demandes de différents systèmes étant appliquées centralement de manière uniforme sur la base des grandeurs de guidage du système, par exemple du couple de sortie de boîte de visses.

8. Procédé d'octroi d'un statut de priorité des informateurs, par exemple des plug-ins, pour la commande coordonnée de la ligne d'entraînement d'un véhicule, réalisé par un système informatique selon l'une quelconque des revendications 1 à 7 :
selon lequel
- une liste avec des demandeurs et/ou des plug-ins est triée dans l'ordre croissant ou décroissant suivant le niveau de priorité,
- la liste triée est traitée tout d'abord de manière séquentielle avec les demandeurs et/ou les plug-ins présentant la priorité la plus élevée, et
- le traitement de la liste est interrompu dès qu'un demandeur et/ou un plug-in comprend un souhait de demande pour sélectionner ce souhait de demande.

9. Procédé d'octroi d'un statut de priorité selon la revendication 8,
**caractérisé en ce que**
le souhait de demande sélectionné est enregistré et communiqué.

10. Procédé d'octroi d'un statut de priorité selon la revendication 8 ou 9,
**caractérisé en ce que**
différentes listes sont traitées pour l'adaptation à des critères d'optimisation globaux, par exemple une adaptation économique, une adaptation sport ou une détection hiver.

11. Procédé d'octroi d'un statut de priorité selon l'une des revendications 8 à 10,
**caractérisé en ce que**
chaque demandeur et/ou chaque plug-in se caractérise clairement par une identité (ID), de préférence sous forme de chiffre, et par une position dans les différentes listes pour le traitement.

12. Procédé d'octroi d'un statut de priorité des informateurs, par exemple des plug-ins, pour la commande coordonnée de la ligne d'entraînement d'un véhicule, réalisé par un système informatique selon l'une quelconque des revendications 1 à 7 avec les étapes suivantes :
- tous les demandeurs sont traités dans un ordre quelconque, par exemple séquentiel, dans une liste avec des demandeurs et/ou des plug-ins, et
- le souhait de demande est déterminé avec le souhait de demande minimum et/ou maximum ou le souhait moyen de demande des demandeurs à partir des souhaits de demande des demandeurs.

13. Procédé d'octroi d'un statut de priorité selon la revendication 12,
**caractérisé en ce que**
pour déterminer le souhait de demande minimum et/ou maximum :
- le premier souhait de demande demandé est transféré en mémoire auxiliaire,
- chaque souhait de demande est comparé à un souhait de demande transféré en mémoire auxiliaire pour déterminer s'il est supérieur et/ou inférieur à un souhait de demande transféré en mémoire auxiliaire,
- le souhait de demande demandé est transféré en mémoire auxiliaire s'il est supérieur et/ou inférieur au souhait de demande transféré en mémoire et sinon s'il n'y a pas de mémorisation, et
- le souhait de demande minimum et/ou maximum est transféré en mémoire intermédiaire et communiqué après la demande de tous les demandeurs.

14. Procédé d'octroi d'un statut de priorité selon la revendication 12 ou 13,
**caractérisé en ce que**
dans le cas de certains demandeurs, par exemple de demandeurs commandant le moteur et le frein, avec un souhait de demande donné, par exemple une intervention de freinage, on sélectionne le souhait de demande minimum et/ou maximum, par exemple le souhait de propulsion minimum, et sinon le souhait de demande minimum et/ou maximum.

15. Procédé d'octroi d'un statut de priorité selon l'une des revendications 12 à 14,
**caractérisé en ce que**
différents demandeurs ont pour effet que d'autres demandeurs donnés ne sont pas pris en compte lors du calcul du souhait de demande minimum et/ou maximum, autrement dit par exemple une pédale d'accélérateur du demandeur a pour effet que tous les demandeurs exerçant un freinage/ralentissement ne sont pas pris en compte.

16. Procédé d'octroi d'un statut de priorité selon l'une des revendications 12 à 15,
**caractérisé en ce que**
différentes listes sont traitées pour être adaptées à des critères d'optimisation globaux, par exemple adaptation économique, adaptation sport ou détection hiver.

17. Procédé d'octroi d'un statut de priorité selon l'une des revendications 12 à 16,
**caractérisé en ce que**
chaque demandeur et/ou chaque plug-in se caractérise clairement par une identité (ID), de préférence sous forme de chiffre, pour le traitement.

18. Procédé d'octroi d'un statut de priorité des demandeurs, par exemple des plug-ins, selon l'une quelconque des revendications 8 à 17,
**caractérisé en ce que**
le premier procédé d'octroi d'un statut de priorité suivant l'une quelconque des revendications 8 à 11 est combiné au deuxième procédé d'octroi de statut de priorité suivant l'une quelconque des revendications 12 à 17, par exemple par le fait que le deuxième procédé d'octroi d'un statut de priorité n'est appliqué que si le premier procédé d'octroi de statut de priorité ne fournit aucun souhait de demande.

19. Procédé pour la commande, notamment pour la commande coordonnée de la ligne d'entraînement d'un véhicule automobile, réalisé avec un système informatique suivant les revendications 1 à 7 avec les étapes et/ou phases suivantes :
- caractérisation des influences environnementales,
- détermination d'un critère d'optimisation global, par exemple sport, économique ou réducteur d'usure,
- interprétation du souhait du conducteur
- détermination du point de fonctionnement dynamique optimal, et
- démarrage du point de fonctionnement dynamique optimal.

20. Procédé selon la revendication 19,
**caractérisé en ce que**
pour caractériser l'influence environnementale, des données environnementales actuelles sont réparties et spécifiées le cas échéant, par exemple grandeurs du véhicule, comme la vitesse, l'accélération transversale, l'état de la ligne d'entraînement comme l'embrayage et la poussée/traction, la détection du type de conduite telle que sportive ou économique par la déduction à partir du comportement de conduite, la détermination de la situation de conduite comme en montagne, en virage, en hiver, en ville, sur autoroute.

21. Procédé selon la revendication 19 ou 20,
**caractérisé en ce que**
lors de l'interprétation du souhait du conducteur, on déduit une spécification pour un déplacement longitudinal d'un véhicule, par exemple d'après l'interprétation de la pédale d'accélérateur on déduit l'accélération/le ralentissement et/ou suivant les spécifications d'un régulateur de vitesse de conduite ou ACC, en répartissant une grandeur pilote du système Couple de sortie de boîte en une grandeur du couple de sortie de boîte pour la ligne d'entraînement et en une grandeur de ralentissement du véhicule pour le frein.

22. Procédé selon l'une des revendications 19 à 21,
**caractérisé en ce que**
pour déterminer un point de fonctionnement dynamique optimal pour un couple de sortie arrière de boîte, on calcule un couple moteur donné et une transmission donnée.

23. Procédé selon l'une des revendications 19 à 22,
**caractérisé en ce que**
le démarrage du point de fonctionnement dynamique optimal se produit dans un intervalle donné pour amortissement, par exemple pour la capacité de marche, le confort, la sécurité et la protection des groupes mécaniques.

24. Procédé selon l'une des revendications 19 à 23,
**caractérisé en ce que**
les missions des phases des coordinateurs dans un Layer sont traitées suivant l'une quelconque des revendications 1 à 7, et les contenus des phases des plug-ins sont déterminés via des interfaces, les plug-ins étant de préférence sélectionnés par un procédé d'octroi de statut prioritaire suivant l'une quelconque des revendications 8 à 18.

25. Système informatique selon l'une des revendications 1 à 7, avec une commande de ligne d'entraînement d'un véhicule automobile pour réaliser un procédé selon l'une des revendications 19 à 24 avec un système logiciel orienté objet avec les composants suivants orientés objet :
- déplacement du véhicule (Vehicle Motion, VM),
- ligne d'entraînement (Powertrain, PT),
- coordinateur du véhicule (Vehicle Coordinator, VC),
- informateurs, par exemple grandeurs environnementales (Environment Data, ED), grandeurs d'état (Driving Condition Data, DD), grandeurs du véhicule (Vehicle Data, VD) et grandeurs d'utilisateur (User Data, UD),
ces composants orientés objet communiquant avec des interfaces vers l'intérieur et l'extérieur (Interface In and Out) et avec un coordinateur de critère (Criteria Coordinator, CC) pour la demande des plug-ins et/ou des demandeurs.

26. Système informatique selon la revendication 25,
**caractérisé en ce que**
le composant Déplacement du véhicule présente par exemple les composants Systèmes de traction et de stabilité du véhicule (ESP), Coordinateur de déplacement du véhicule (Vehicle Motion Coordinator, VMC) et Propulsion/frein (Propulsion/Brake, PrB).

27. Système informatique selon la revendication 26,
**caractérisé en ce que**
le composant Propulsion/frein présente par exemple le composant groupe propulseur (Propulsion System, PrSy), Système de freinage (Brakesystem, BrSy) et un coordinateur de propulsion et de freinage (Propulsion and Brake Coordinator, PrBC), avec un composant Répartiteur d'accélération (Acceleration Request Manager, AccRM).

28. Système informatique selon l'une des revendications 25 à 27,
**caractérisé en ce que**
le composant Ligne d'entraînement présente par exemple les composants Coordinateur de ligne d'entraînement (Powertrain Coordinator, PTC), Moteur (Engine, Eng), Transmission (Transmission, Tra) et l'informateur Grandeurs d'état de ligne d'entraînement (Powertrain Data, PD).

29. Système informatique selon l'une des revendications 25 à 28,
**caractérisé en ce que**
le coordinateur de critères communique avec une interface d'application (Application Programming-Interface, API) .

30. Procédé selon l'une des revendications 19 à 24, réalisé avec un système informatique selon l'une quelconque des revendications 25 à 29 avec les étapes suivantes :
- pour caractériser les influences environnementales, qui sont attribuées aux données environnementales actuelles et/ou aux grandeurs d'état dans les informateurs auxquelles tous les autres composants peuvent avoir accès, exceptées les grandeurs d'état de la ligne d'entraînement auxquelles seul la ligne d'entraînement peut accéder,
- le coordinateur du véhicule contrôle la détermination d'un critère d'optimisation global qui demande des propositions à partir des plug-ins proposés via le coordinateur de critères,
- le coordinateur de propulsion et de freinage commande l'interprétation du souhait du conducteur qui détermine en coopération avec des plug-ins sélectionnés les spécifications pour les freins et la ligne d'entraînement via le coordinateur de critères, le coordinateur de déplacement du véhicule coordonnant de préférence ces spécifications avec le système de traction et de stabilité de conduite, et les spécifications étant transmises à la ligne d'entraînement et/ou au système de frein, l'interface d'application convertissant par exemple une accélération de conduite en un couple de sortie de boîte transmis à la ligne d'entraînement,
- le coordinateur de la ligne d'entraînement sélectionne des plug-ins pour déterminer le point de fonctionnement dynamique optimal via le coordinateur de critères, et le coordinateur de la ligne d'entraînement communique avec les plug-ins via le coordinateur de critères.

31. Procédé selon la revendication 30,
**caractérisé en ce que**
la sélection des plug-ins est réalisée avec un procédé d'octroi de statut prioritaire suivant l'une des revendications 8 à 18.

32. Programme informatique avec des moyens de codage du programme pour réaliser toutes les étapes d'un procédé suivant l'une quelconque des revendications 8 à 24 ou 30 à 31, lorsque le programme informatique est réalisé sur un ordinateur ou sur une unité de calcul correspondante.

33. Produit de programme informatique dont les moyens de codage du programme sont enregistrés sur un support de données lisible, pour réaliser un procédé selon l'une quelconque des revendications 8 à 24 ou 30 à 31, lorsque le programme informatique est réalisé sur un ordinateur ou sur une unité de calcul correspondante.
